# EUROPEAN PATENT APPLICATION

(11) **EP 4 848 073 A1**
(43) Date of publication of application: **02.12.2026**
(21) Application number: 24925499.6
(22) Date of filing: 24.09.2024
(51) Int. Cl.: G06F 8/41

(54) **DATA PROCESSING METHOD AND RELATED DEVICE**

(30) Priority: 23.02.2024 CN 202410204972
(71) Applicant: HUAWEI TECHNOLOGIES CO., LTD., Shenzhen, Guangdong 518129 (CN)
(72) Inventor: WANG, Enbo, Shenzhen, Guangdong 518129 (CN); LIANG, Wenliang, Shenzhen, Guangdong 518129 (CN); SHEN, Haihua, Shenzhen, Guangdong 518129 (CN); LIN, Hao, Shenzhen, Guangdong 518129 (CN)
(74) Representative: Goddar, Heinz J.
(86) International application number: PCT/CN2024/120526
(87) International publication number: WO 2025/175759

(57) **Abstract**

A data processing method and a related device are provided. The method includes: obtaining an original code file (S210); determining, based on a compilation instruction, an encoding format corresponding to each code block in the original code file (S220); and compiling, based on the encoding format corresponding to each code block (S230), at least one code block into a target executable file. The target executable file includes at least one section, and each section includes a section identifier and at least one submodule. The section identifier indicates the type of the code block corresponding to the section. The submodule includes a submodule option and submodule code. The submodule option indicates an encoding format corresponding to the submodule code. The submodule code includes at least one data sequence or identification information corresponding to the at least one data sequence, and each data sequence is determined based on the encoding format indicated by the submodule option and a corresponding code block. In the method, the code block is encoded in a standardized manner to generate the target executable file, thereby enabling cross-platform execution of the target executable file and improving running efficiency.

## Description

This application claims priority to Chinese Patent Application No. 202410204972.6, filed with the China National Intellectual Property Administration on February 23, 2024 and entitled "DATA PROCESSING METHOD AND RELATED DEVICE", which is incorporated herein by reference in its entirety.

### TECHNICAL FIELD

This application relates to the computer field, and more specifically, to a data processing method and apparatus, a chip system, a computer-readable storage medium, and a computer program product.

### BACKGROUND

In a 6th generation mobile communication (6th generation mobile communication, 6G) network, after intelligent services are orchestrated and scheduled, compute tasks are widely distributed across any compute node of the 6G network, for example, a cloud node, an edge (edge network) node, or a terminal node. Due to the mobility, dynamism, and tidal effect of the mobile network, the compute tasks need to be capable of migrating or horizontally scaling between compute nodes. In addition, because of the diversity and heterogeneity of the compute nodes (especially edge compute nodes and mobile terminals), and the widespread requirement for accelerators to support artificial intelligence (artificial intelligence, AI) training and inference, the compute tasks need to be executed in a cross-platform manner, including across operating systems and/or physical processor instruction set architectures. However, in conventional technologies, an executable file used to execute a compute task is often unable to run across platforms, or fails to achieve consistent expected behavior when being executed across platforms, resulting in low execution efficiency.

Therefore, how to improve execution efficiency of compute tasks during cross-platform execution becomes an urgent problem to be resolved.

### SUMMARY

This application provides a data processing method and apparatus, a compute device, a chip system, a computer-readable storage medium, and a computer program product, so that code in an original code file can be encoded or run in a standardized manner, thereby improving execution efficiency when a compute task is executed across platforms.

According to a first aspect, a data processing method is provided. The method includes: obtaining at least one original code file; determining, based on at least one compilation instruction, an encoding format corresponding to each code block, where the encoding format corresponding to the code block indicates a structure of the encoded code block; and compiling, based on the encoding format corresponding to each of the at least one code block, the at least one code block into a target executable file.

The original code file includes at least one code block, and each code block includes at least one code statement. The target executable file includes at least one section, and each section includes a section identifier and at least one submodule. Each submodule corresponds to one code block, and all submodules in each section correspond to code blocks of a same type. The section identifier indicates the type of the code block corresponding to the section. Each submodule includes a submodule option and submodule code. The submodule option indicates an encoding format corresponding to the submodule code. The submodule code includes at least one data sequence or identification information corresponding to the at least one data sequence, and each of the at least one data sequence is determined based on the encoding format indicated by the submodule option and a corresponding code block.

In some embodiments, the compilation instruction at least includes: converting the original code file into an object file, or linking one or more object files to generate a target executable file, or linking one or more object files and one or more original code files to generate a target executable file.

In this embodiment of this application, the compilation instruction indicates the encoding format corresponding to each code block, and the code block is encoded into a submodule. In the submodule, an encoding format corresponding to the submodule is indicated by a submodule option, and submodules corresponding to code blocks of a same type are set in a same section. Therefore, the at least one code block is encoded in a standardized manner, to generate the target executable file. Because all submodules included in the target executable file are organized in a standardized form, when the target executable file is executed across platforms, a to-be-run data sequence in the target executable file can be quickly determined, to run the data sequence, so as to improve execution efficiency of a compute task.

With reference to the first aspect, in some implementations of the first aspect, a compilation instruction corresponding to a first code block includes a first parameter, a submodule option of a submodule corresponding to the first code block includes a first option, the first option is the same as the first parameter, and the first code block belongs to the at least one code block.

In this embodiment of this application, based on the compilation instruction corresponding to the code block, an encoding format of the submodule corresponding to the code block is determined, and the first option in the submodule option of the submodule is determined, so that a data sequence obtained by encoding the code block is organized in a standardized form, to help improve execution efficiency when the object file is executed.

With reference to the first aspect, in some implementations of the first aspect, when the submodule option includes a first-type option, the submodule code includes one data sequence, and the data sequence in the submodule code is determined based on an encoding type indicated by the first-type option and a corresponding code block.

In some embodiments, when the first code block conforms to the encoding type indicated by the first-type option, the data sequence included in the submodule code of the first submodule is the same as the first code block. Alternatively, when the first code block does not conform to the encoding type indicated by the first-type option, the data sequence included in the submodule code of the first submodule is a sequence obtained by encoding the first code block based on the encoding type indicated by the first-type option. Alternatively, when the first code block does not conform to the encoding type indicated by the first-type option, the data sequence included in the submodule code of the first submodule is the same as a second code block. A function of the second code block is the same as a function of the first code block, and the second code block conforms to the encoding type indicated by the first-type option. The first code block and the second code block belong to the at least one code block in the original code file. The first submodule corresponds to the first code block, or the first submodule corresponds to the first code block and the second code block.

For example, that the first code block conforms to a first encoding type means that the first code block is a data sequence encoded based on the first encoding type. The first encoding type is any encoding type mentioned in embodiments of this application.

In this embodiment of this application, a structure of the submodule code is determined based on the submodule option, and the data sequence in the corresponding submodule code is determined based on the encoding type indicated by the first-type option and the first code block, so that the data sequence and the first-type option are organized in a standardized manner, to generate the submodule corresponding to the code block.

With reference to the first aspect, in some implementations of the first aspect, when the submodule option includes a second-type option, the submodule code includes at least one sequence type and a data sequence corresponding to each sequence type, the sequence type indicates an encoding type corresponding to a data sequence, and the data sequence is determined based on the encoding type indicated by the sequence type and a corresponding code block.

In some embodiments, when the first code block conforms to an encoding type indicated by a first sequence type, a first data sequence included in submodule code of the first submodule is the same as the first code block. Alternatively, when the first code block does not conform to the encoding type indicated by the first sequence type, the first data sequence included in the submodule code of the first submodule is a sequence obtained by encoding the first code block based on the encoding type indicated by the first sequence type. Alternatively, when the first code block does not conform to the encoding type indicated by the first sequence type, the first data sequence included in the submodule code of the first submodule is the same as the second code block. A function of the second code block is the same as a function of the first code block, and the second code block conforms to the encoding type indicated by the first sequence type. The first code block and the second code block belong to the at least one code block in the original code file. The first submodule corresponds to the first code block, or the first submodule corresponds to the first code block and the second code block. The first sequence type belongs to the at least one sequence type, and the first data sequence corresponds to the first sequence type.

In this embodiment of this application, the first code block is encoded based on one or more sequence types separately, to obtain one or more data sequences obtained by encoding the first code block, or a code block that conforms to an encoding type indicated by the one or more sequence types is used as a corresponding data sequence, so that a plurality of options are provided for a compute node that runs the target executable file, and the target executable file can adapt to more running environments and implement cross-platform running.

With reference to the first aspect, in some implementations of the first aspect, when the submodule option includes a third-type option, the submodule code includes first identification information, or the submodule code includes first identification information and at least one sequence type, the first identification information indicates, in a code database, the at least one data sequence corresponding to the code block corresponding to the submodule, and the sequence type indicates an encoding type corresponding to a data sequence.

With reference to the first aspect, in some implementations of the first aspect, the method further includes: determining, based on the at least one sequence type, at least one data sequence corresponding to the first code block, where each data sequence corresponds to one sequence type, and the first code block belongs to the at least one code block; and transmitting the at least one sequence type and the at least one data sequence corresponding to the first code block to the code database, to obtain the first identification information of the submodule corresponding to the first code block.

In this embodiment of this application, the first code block is encoded by using one or more sequence types separately, and/or the code block that conforms to the encoding type indicated by the sequence type is searched for based on the sequence type, to obtain at least one data sequence, to provide a plurality of options for the compute node that runs the target executable file, thereby enabling cross-platform execution of the target executable file. In addition, the at least one data sequence obtained by encoding the first code block does not need to be stored in the target executable file. Therefore, a storage space occupied by the target executable file can be reduced, and the target executable file can be easily transmitted.

With reference to the first aspect, in some implementations of the first aspect, the method is performed by a first compute node, and each of the at least one sequence type is a sequence type capable of being generated by the first compute node.

In this embodiment of this application, the first compute node determines, based on the sequence type capable of being generated by the node, the at least one data sequence corresponding to the first code block, to provide more choices for the compute node that runs the target executable file, so as to facilitate cross-platform running of the target executable file.

With reference to the first aspect, in some implementations of the first aspect, when the first code block is an accelerator code block, a submodule option of a first submodule corresponding to the first code block further includes a second option, the first code block belongs to the at least one code block, the second option indicates that submodule code of the first submodule is intermediate representation code or device-specific code, and when the submodule code is the intermediate representation code, the submodule code is run by an accelerator after being translated into the device-specific code.

In this embodiment of this application, the first code block may be directly encoded into the device-specific code, to run on the accelerator. Alternatively, the first code block may be encoded into the intermediate representation code, to run on the accelerator after translation. In the method, the second option may indicate the type of the submodule code of the first submodule in the submodule, to organize the structure of the submodule in a standardized form, so as to facilitate cross-platform running of the submodule.

With reference to the first aspect, in some implementations of the first aspect, the compilation instruction corresponding to the first code block further includes a second parameter, and the second parameter is the same as the second option.

In this embodiment of this application, based on the compilation instruction corresponding to the code block, an encoding format of the submodule corresponding to the code block is determined, and the second option in the submodule option of the submodule is determined, so that a data sequence obtained by encoding the code block is organized in a standardized form, to help improve execution efficiency when the object file is executed.

With reference to the first aspect, in some implementations of the first aspect, when the at least one code block includes one or more accelerator code blocks, the target executable file further includes an accelerator function section, and the accelerator function section is used to declare functions corresponding to the one or more accelerator code blocks.

In this embodiment of this application, when the original code file includes the accelerator code block, the target executable file may further declare a function in an accelerator code section based on the accelerator function section.

With reference to the first aspect, in some implementations of the first aspect, the type of the code block includes an accelerator code block, an AI model code block, or a host shared library code block. The accelerator code block is used for running on an accelerator. The AI model code block is used for training or inference of an AI model. The host shared library code block is used for assisting in running the accelerator code block and/or the AI model code block.

According to a second aspect, a data processing method is provided. The method includes: obtaining a target executable file, determining, based on a submodule option of a submodule and a section identifier in the target executable file, a to-be-run data sequence corresponding to the submodule; and running the to-be-run data sequence corresponding to the submodule.

The target executable file corresponds to at least one original code file, each original code file includes at least one code block, and each code block includes at least one code statement. The target executable file includes at least one section, each section includes a section identifier and at least one submodule, and each submodule corresponds to one code block. All submodules in the section correspond to code blocks of a same type. The section identifier indicates the type of the code block corresponding to the section. Each submodule includes a submodule option and submodule code. The submodule option indicates an encoding format corresponding to the submodule code. The submodule code includes at least one data sequence or identification information corresponding to the at least one data sequence, and each of the at least one data sequence is determined based on the encoding format indicated by the submodule option and a corresponding code block. The to-be-run data sequence belongs to the at least one data sequence.

In this embodiment of this application, because all submodules included in the target executable file are organized in a standardized form, when the target executable file is executed across platforms, the to-be-run data sequence in the target executable file can be quickly determined, to run the data sequence, so as to improve execution efficiency of a compute task.

With reference to the second aspect, in some implementations of the second aspect, when the submodule option includes a first-type option, the submodule code includes a data sequence, the data sequence in the submodule code is determined based on an encoding type indicated by the first-type option and a corresponding code block, and the data sequence in the submodule code is the to-be-run data sequence.

In some embodiments, when the first code block conforms to the encoding type indicated by the first-type option, the data sequence included in the submodule code of the first submodule is the same as the first code block. Alternatively, when the first code block does not conform to the encoding type indicated by the first-type option, the data sequence included in the submodule code of the first submodule is a sequence obtained by encoding the first code block based on the encoding type indicated by the first-type option. Alternatively, when the first code block does not conform to the encoding type indicated by the first-type option, the data sequence included in the submodule code of the first submodule is the same as a second code block. A function of the second code block is the same as a function of the first code block, and the second code block conforms to the encoding type indicated by the first-type option. The first code block and the second code block belong to the at least one code block in the original code file. The first submodule corresponds to the first code block, or the first submodule corresponds to the first code block and the second code block.

For example, that the first code block conforms to a first encoding type means that the first code block is a data sequence encoded based on the first encoding type. The first encoding type is any encoding type mentioned in embodiments of this application.

In this embodiment of this application, an internal structure of the submodule code is determined based on the submodule option, so that the to-be-run data sequence can be directly determined from the submodule code and run, to improve efficiency of running the submodule.

With reference to the second aspect, in some implementations of the second aspect, when the submodule option includes a second-type option, the submodule code includes at least one sequence type and a data sequence corresponding to each sequence type, the sequence type indicates an encoding type corresponding to a data sequence, and the data sequence is determined based on the encoding type indicated by the sequence type and a corresponding code block.

In some embodiments, when the first code block conforms to an encoding type indicated by a first sequence type, a first data sequence included in submodule code of the first submodule is the same as the first code block. Alternatively, when the first code block does not conform to the encoding type indicated by the first sequence type, the first data sequence included in the submodule code of the first submodule is a sequence obtained by encoding the first code block based on the encoding type indicated by the first sequence type. Alternatively, when the first code block does not conform to the encoding type indicated by the first sequence type, the first data sequence included in the submodule code of the first submodule is the same as the second code block. A function of the second code block is the same as a function of the first code block, and the second code block conforms to the encoding type indicated by the first sequence type. The first code block and the second code block belong to the at least one code block in the original code file. The first submodule corresponds to the first code block, or the first submodule corresponds to the first code block and the second code block. The first sequence type belongs to the at least one sequence type, and the first data sequence corresponds to the first sequence type.

With reference to the second aspect, in some implementations of the second aspect, when the submodule option includes the second-type option, the at least one sequence type included in the submodule code is determined based on the section identifier and the encoding format indicated by the submodule option of the submodule. When the at least one sequence type included in the submodule code includes a preset sequence type, it is determined that a data sequence corresponding to the preset sequence type is the to-be-run data sequence. When the at least one sequence type included in the submodule code does not include the preset sequence type, an alert is sent.

In this embodiment of this application, the submodule includes a data sequence that conforms to an encoding type indicated by each of the at least one sequence type, so that a compute node that runs the submodule can select a proper data sequence from the data sequence for running, to implement cross-platform running.

With reference to the second aspect, in some implementations of the second aspect, when the submodule option includes a third-type option, the submodule code includes first identification information, or the submodule code includes first identification information and at least one sequence type, the first identification information indicates, in a code database, the at least one data sequence corresponding to the code block corresponding to the submodule, and the sequence type indicates an encoding type corresponding to a data sequence.

With reference to the second aspect, in some implementations of the second aspect, when the submodule option includes the third-type option, the first identification information is determined based on the section identifier and the encoding format indicated by the submodule option of the submodule; when the at least one data sequence indicated by the first identification information includes a data sequence corresponding to a preset sequence type, it is determined that the data sequence corresponding to the preset sequence type is the to-be-run data sequence; and when the at least one data sequence indicated by the first identification information does not include the data sequence corresponding to the preset sequence type, an alert is sent.

In this embodiment of this application, the compute node that runs the submodule may determine, from the at least one data sequence indicated by the first identification information, a data sequence that can be run on the compute node, to implement cross-platform running of the submodule.

With reference to the second aspect, in some implementations of the second aspect, the submodule option includes the third-type option, and the at least one data sequence corresponding to the first identification information is stored in a local storage space, the method further includes: obtaining, from the local storage space based on the first identification information, the at least one data sequence corresponding to the first identification information; and when the at least one data sequence corresponding to the first identification information is not stored in the local storage space, obtaining, from the code database based on the preset sequence type and the first identification information, the data sequence corresponding to the first identification information and the preset sequence type, or sending an alert.

In this embodiment of this application, the at least one data sequence obtained by encoding the first code block may be stored in the compute node that runs the submodule corresponding to the first code block, or may be stored in a remote code database. When the data sequence is stored in the compute node, a transmission delay and bandwidth costs of obtaining the data sequence from the remote code database can be reduced.

With reference to the second aspect, in some implementations of the second aspect, the method is performed by a second compute node, and the preset sequence type is a sequence type capable of being run by the second compute node.

In this embodiment of this application, the second compute node may select, from the submodule based on the sequence type capable of being run by the compute node, a proper data sequence, to implement cross-platform running of the submodule.

With reference to the second aspect, in some implementations of the second aspect, when a first code block is an accelerator code block, a submodule option of a first submodule corresponding to the first code block further includes a second option, the first code block belongs to the at least one code block, and the second option indicates that submodule code of the first submodule is intermediate representation code or device-specific code; when the submodule code is the intermediate representation code, the to-be-run data sequence is translated into the device-specific code, and the device-specific code corresponding to the to-be-run data sequence is run on an accelerator; or when the submodule code is the device-specific code, the to-be-run data sequence is run on an accelerator.

In this embodiment of this application, whether the to-be-run data sequence needs to be translated may be determined based on the second option in the submodule option, so that the compute node that runs the submodule can run the to-be-run data sequence or the device-specific code corresponding to the to-be-run data sequence on the accelerator based on the second option.

With reference to the second aspect, in some implementations of the second aspect, the type of the code block includes an accelerator code block, an AI model code block, or a host shared library code block. The accelerator code block is used for running on an accelerator. The AI model code block is used for training or inference of an AI model. The host shared library code block is used for assisting in running the accelerator code block and/or the AI model code block.

According to a third aspect, a data processing apparatus is provided. The apparatus includes modules configured to implement the first aspect or any possible implementation of the first aspect.

According to a fourth aspect, a data processing apparatus is provided. The apparatus includes modules configured to implement the second aspect or any possible implementation of the second aspect.

According to a fifth aspect, a data processing system is provided. The data processing system includes the data processing apparatus according to the third aspect and the data processing apparatus according to the fourth aspect.

According to a sixth aspect, a data processing apparatus is provided. The data processing apparatus includes a processor, and the processor is configured to execute instructions stored in a memory, so that the data processing apparatus is configured to perform the method according to the first aspect, the second aspect, or any possible implementation of the first aspect or the second aspect.

In some embodiments, the data processing apparatus includes at least one compute device, each of the at least one compute device includes a processor, and the processor of the at least one compute device is configured to execute the instructions stored in the memory, so that the data processing apparatus is configured to perform the method according to the first aspect, the second aspect, or any possible implementation of the first aspect or the second aspect.

According to a seventh aspect, a compute device cluster is provided, including at least one compute device. Each compute device includes a processor and a memory. The processor of the at least one compute device is configured to execute instructions stored in the memory of the at least one computing device, so that the compute device cluster performs the method according to the first aspect, the second aspect, or any implementation of the first aspect or the second aspect.

According to an eighth aspect, a chip system is provided. The chip system includes a logic circuit. The logic circuit is configured to: be coupled to an input/output interface, and transmit data through the input/output interface, to perform the method according to the first aspect, the second aspect, or any implementation of the first aspect or the second aspect.

According to a ninth aspect, this application provides a computer-readable storage medium, including computer program instructions. When the computer program instructions are executed by a data processing apparatus, the data processing apparatus performs the method according to the first aspect, the second aspect, or any implementation of the first aspect or the second aspect.

According to a tenth aspect, this application provides a computer program product including instructions. When the instructions are executed by a data processing apparatus, the data processing apparatus performs the method according to the first aspect, the second aspect, or any implementation of the first aspect or the second aspect.

### BRIEF DESCRIPTION OF DRAWINGS

FIG. 1 is a diagram of a structure of a data processing system according to an embodiment of this application;
FIG. 2 is a schematic flowchart of a data processing method according to an embodiment of this application;
FIG. 3 is a diagram of a structure of a target executable file according to an embodiment of this application;
FIG. 4 is a diagram of a structure of a submodule according to an embodiment of this application;
FIG. 5 is a diagram of a structure of a submodule according to another embodiment of this application;
FIG. 6 is a diagram of a structure of a submodule according to another embodiment of this application;
FIG. 7 is a schematic flowchart of a data processing method according to another embodiment of this application;
FIG. 8 is a schematic flowchart of a data processing method according to another embodiment of this application;
FIG. 9 is a diagram of a structure of a data processing apparatus according to an embodiment of this application;
FIG. 10 is a diagram of a structure of a compute device according to an embodiment of this application;
FIG. 11 is a diagram of a structure of a compute device cluster according to an embodiment of this application; and
FIG. 12 is a diagram in which compute devices 1000A and 1000B are connected through a network according to an embodiment of this application.

### DESCRIPTION OF EMBODIMENTS

The following describes technical solutions of this application with reference to accompanying drawings.

All aspects, embodiments, or features are presented in embodiments of this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are for representing giving an example, an illustration, or a description. Any embodiment or design scheme described as an "example" in embodiments of this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with evolution of a technology and emergence of a new service scenario.

Reference to "an embodiment", "some embodiments", or the like described in the specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

In embodiments of this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

The technical solutions in embodiments of this application may be applied to a compute device, for example, a device having a computing capability, like a server, a host, a personal computer, a notebook computer, or a desktop computer. The server may be a local server, or may be a cloud server. This is not limited in embodiments of this application. The technical solutions in embodiments of this application may be further applied to a compute node in a 6G network. The compute node may be deployed on a cloud, an edge network, or a terminal device.

In a technology, in a WebAssembly (Wasm) technology, a compute task may be executed across operating systems and central processing unit (central processing unit, CPU) instruction set architectures, but cannot be executed across accelerator instruction set architectures. To be specific, in the Wasm, an encoding and loading manner of accelerator code and/or AI model code cannot be specified in a standardized manner, so that a compiler cannot generate a Wasm module including the accelerator code and/or the AI model code in a standardized format, and a Wasm runtime cannot sense the accelerator code and/or the AI model code in the Wasm module, so that the accelerator code and/or the AI model code is processed in a standardized manner. When a specific host shared library is required for loading and executing the accelerator code and/or the AI model code, in the Wasm, an encoding and loading manner of host shared library code cannot be specified in a standardized manner, so that a Wasm module including the host shared library code in a standardized format cannot be generated. Because in the Wasm, the accelerator code, the AI model code, or the host shared library code cannot be loaded or run in the standardized manner, Wasm modules generated by different compilers cannot achieve a same expected behavior during running. As a result, execution efficiency of the compute task is low.

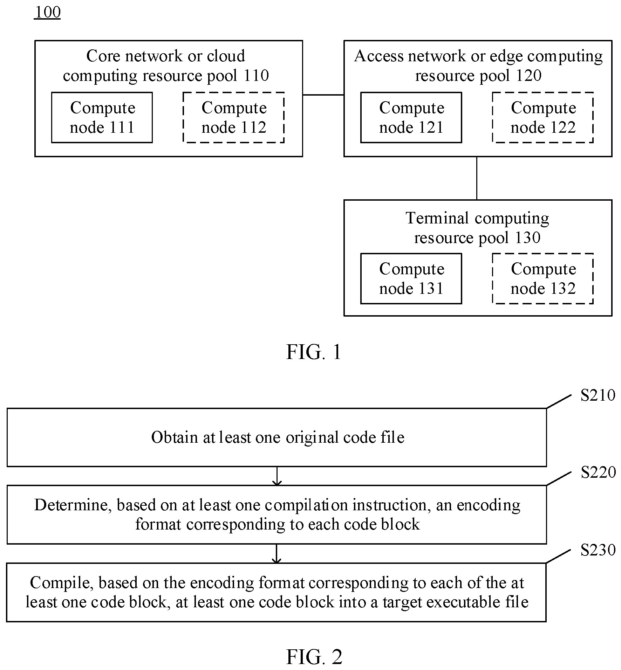

FIG. 1 is a diagram of a structure of a data processing system according to an embodiment of this application. The data processing system 100 in FIG. 1 includes at least one of the following computing resource pools: a core network or cloud computing resource pool 110, an access network or edge computing resource pool 120, or a terminal computing resource pool 130.

In some embodiments, the data processing system 100 may include at least one core network or cloud computing resource pool 110. Alternatively, the data processing system 100 may include at least one access network or edge computing resource pool 120. Alternatively, the data processing system 100 may include at least one terminal computing resource pool 130.

The core network or cloud computing resource pool 110 may provide a cloud infrastructure for a user, so that the user can use, in a manner like leasing, a computing capability, a storage capability, or a cloud service provided in the core network or cloud computing resource pool 110, or the user can deploy a computing model, a private cloud service, or the like in the core network or cloud computing resource pool 110. The core network or cloud computing resource pool 110 includes at least one compute node, for example, a compute node 111 and/or a compute node 112.

The access network or edge computing resource pool 120 is a resource pool constructed on an edge infrastructure based on a cloud computing technology, a virtualization technology, or another computing technology. This access network may be a radio access network (radio access network, RAN) or a wired access network. The access network or edge computing resource pool 120 has capabilities such as computing, networking, and storage, and may form "cloud-edge-device tripartite collaboration" with the core network or cloud computing resource pool 110 and the terminal computing resource pool 130. The access network or edge computing resource pool 120 may process tasks such as network forwarding, storage, computing, and intelligent data analysis, and provide a plurality of groups of cloud services, thereby reducing a response latency and bandwidth costs, and reducing pressure on the cloud. The access network or edge computing resource pool 120 includes at least one compute node, for example, a compute node 121 and/or a compute node 122.

The terminal computing resource pool 130 includes one compute node. The compute node may be a terminal device, or a chip or a computing module in the terminal device. For example, the terminal computing resource pool 130 includes a compute node 131 and/or a compute node 132. The terminal computing resource pool 130 has capabilities such as computing, networking, and storage. The compute node in the terminal computing resource pool 130 is connected to the access network in a wireless or wired manner. The compute node is a device having a wireless or wired transceiver function, and may send signals to a network device, or receive signals from the network device. The terminal device may be an access terminal, a subscriber unit (subscriber unit), a subscriber station, a mobile station (mobile station, MS), a mobile station, a remote station, a remote terminal, a mobile device, a user terminal, user equipment (user equipment, UE), a wireless communication device, a user agent, or a user apparatus. The user equipment may alternatively be a cellular phone (cellular phone), a cordless phone, a session initiation protocol (session initiation protocol, SIP) phone, a wireless local loop (wireless local loop, WLL) station, a smartphone (smartphone), a personal digital assistant (personal digital assistant, PDA), a handheld device having a wireless communication function, a compute device or another processing device connected to a wireless modem, a vehicle-mounted device, a wearable device, a vehicle, a tablet computer, a smart speaker, a sensor like a train detector or a gas station, a terminal in a 5G network, user equipment in any form in a future network, or the like. This is not limited in embodiments of this application.

It should be noted that some compute nodes in the data processing system 100 are only configured to execute a compute task, may further receive or execute an orchestration decision and/or a scheduling decision of an orchestration function module and/or a scheduling function module, and are not configured to perform development, compilation, debugging, testing, and the like. Alternatively, some compute nodes in the data processing system 100 are only configured to perform development, compilation, debugging, testing, and the like, and are not configured to: execute a compute task, and receive or execute an orchestration decision and/or a scheduling decision of an orchestration function module and/or a scheduling function module. Alternatively, some compute nodes in the data processing system 100 are configured to perform development, compilation, debugging, testing, and the like, and are further configured to: execute a compute task, and receive or execute an orchestration decision and/or a scheduling decision of an orchestration function module and/or a scheduling function module.

For example, a compute node that can be configured to execute a compute task is also referred to as an execution node. In other words, the execution node includes a compute node that is only configured to execute a compute task and a compute node that is configured to perform development, compilation, debugging, testing, and the like and is further configured to execute a compute task.

For example, a compute node that can be configured to perform development, compilation, debugging, testing, and the like is also referred to as a development node. In other words, the development node includes a compute node that is only configured to perform development, compilation, debugging, testing, and the like and a compute node that is configured to perform development, compilation, debugging, testing, and the like and is also configured to execute a compute task.

In some embodiments, the data processing system 100 further includes the orchestration function module and/or the scheduling function module. The orchestration function module is configured to determine an orchestration decision, where the orchestration decision is used to: decompose a computing service into a plurality of compute tasks, or allocate, to a compute task, a range of a resource pool to which a compute node belongs or a range of a compute node. The scheduling function module is configured to determine a scheduling decision, where the scheduling decision is used to allocate a proper compute node to a compute task for computing. The compute node is any compute node in the core network or cloud computing resource pool 110, the access network or edge computing resource pool 120, or the terminal computing resource pool 130, for example, any execution node or any development node.

In some embodiments, some or all compute nodes in the data processing system 100 may be configured to execute a compute task. This may be specifically set by an owner or operation and maintenance personnel of the compute nodes, or may be determined by the orchestration function module or the scheduling function module. For example, a first computing service may be decomposed into one or more compute tasks, and each compute task may be executed in one or more of the core network or cloud computing resource pool 110, the access network or edge computing resource pool 120, or the terminal computing resource pool 130.

For example, because a large transmission latency is likely to be caused when a compute task is executed in the core network or cloud computing resource pool 110, some compute tasks in the first computing service may be allocated to the access network or edge computing resource pool 120 for execution. Alternatively, because the compute node in the terminal computing resource pool 130 is limited by power or computational power, some compute tasks in the first computing service are migrated to the access network or edge computing resource pool 120 for execution. Alternatively, with terminal device switching or user migration, some compute tasks executed in the access network or edge computing resource pool 120 need to be migrated from one compute node to another compute node in the access network or edge computing resource pool 120 for execution, or from a compute node in one access network or edge computing resource pool to a compute node in another access network or edge computing resource pool.

In some embodiments, at least two compute nodes in the core network or cloud computing resource pool 110, the access network or edge computing resource pool 120, or the terminal computing resource pool 130 differ in at least one of the following aspects: an operating system, a processor instruction set architecture, or an accelerator instruction set architecture. When a compute task needs to be migrated to different resource pools for execution, because at least one of operating systems, processor instruction set architectures, or accelerator instruction set architectures of different resource pools differs, it is likely that the compute task cannot be executed across platforms, or it is likely that a same expected behavior cannot be implemented when the compute task is executed across platforms. Alternatively, when a compute task needs to be migrated from one compute node to another compute node in a same resource pool for execution, because at least one of operating systems, processor instruction set architectures, or accelerator instruction set architectures of different compute nodes in the same resource pool differs, it is likely that the compute task cannot be executed across platforms, or it is likely that a same expected behavior cannot be implemented when the compute task is executed across platforms.

FIG. 2 is a schematic flowchart of a data processing method according to an embodiment of this application. The method in FIG. 2 may be performed by a first compute node, and the first compute node may be any development node in FIG. 1. The method in FIG. 2 includes the following steps.

S210: Obtain at least one original code file.

The first compute node may obtain the at least one original code file, where each of the at least one original code file includes at least one code block. Each code block includes at least one code statement. A code language used to write the original code file is not limited in embodiments of this application, for example, C, C++, or Rust.

For example, a type of the code block in the original code file includes one or more of an accelerator code block, an AI model code block, or a host shared library code block. The accelerator code block is used for running on an accelerator. The AI model code block is used for training or inference of an AI model. The host shared library code block is used for assisting in running the accelerator code block and/or the AI model code block.

For example, each code block may include one or more of a function, a method, a class, a package, an artificial neural network, or the like.

For example, the host shared library code block includes code, in a binary format of machine instructions, directly loaded in a physical processor, where the machine instructions are an instruction set supported by the physical processor (for example, a CPU) or an accelerator, for example, an x86 instruction set (including i386, x86_64, and the like), a fifth-generation reduced instruction set computing V (reduced instruction set computing V, RISC-V) instruction set, an advanced reduced instruction set computing machine (advanced RISC machine, ARM) instruction set (including ARMv1 to ARMv9, and the like), or an instruction set of an accelerator like a graphics processing unit (graphics processing unit, GPU), a neural processing unit (neural processing unit, NPU), or a field programmable gate array (field programmable gate array, FPGA).

For example, the machine instructions included in the host shared library code block are general-purpose instructions or instructions developed by a third party. The accelerator code block or the AI model code block is code with a specific function developed by a developer of the original code file or the third party.

S220: Determine, based on at least one compilation instruction, an encoding format corresponding to each code block.

After obtaining the at least one original code file, the first compute node may compile the at least one original code. When compiling the at least one original code, the first compute node may determine, based on the at least one compilation instruction, the encoding format corresponding to each code block. The encoding format corresponding to the code block indicates a structure of the encoded code block.

In some embodiments, the compilation instruction at least includes: converting the original code file into an object file, or linking one or more object files to generate a target executable file, or linking one or more object files and one or more original code files to generate a target executable file.

In some embodiments, a compilation instruction may indicate an encoding format corresponding to one or more code blocks.

For example, the compilation instruction includes a first parameter, and the first parameter indicates the encoding format corresponding to the code block.

For example, the compilation instruction further includes a second parameter, and the second parameter indicates that a data sequence corresponding to the code block is intermediate representation code or device-specific code. When the data sequence corresponding to the code block is the intermediate representation code, the data sequence needs to be translated into the device-specific code before being run by the accelerator.

For example, when the compilation instruction includes only the first parameter, the first parameter may only indicate the encoding format corresponding to the code block. Alternatively, the first parameter may indicate the encoding format corresponding to the code block and that the data sequence corresponding to the code block is the intermediate representation code or the device-specific code.

For example, when the compilation instruction includes the first parameter and the second parameter, after determining, based on the second parameter, that the data sequence corresponding to the code block is the intermediate representation code or the device-specific code, the first compute node determines, based on the first parameter, the encoding format corresponding to the code block.

S230: Compile, based on the encoding format corresponding to each of the at least one code block, the at least one code block into a target executable file.

The first compute node compiles, based on the encoding format corresponding to each code block indicated by the compilation instruction, the at least one code block into the target executable file. The target executable file includes at least one section (section), and each section includes a section identifier and at least one submodule. Each submodule corresponds to one code block. All submodules in the section correspond to code blocks of a same type. The section identifier indicates the type of the code block corresponding to the section. Each submodule includes a submodule option and submodule code. The submodule option indicates an encoding format corresponding to the submodule code. The submodule code includes at least one data sequence or identification information corresponding to the at least one data sequence, and each of the at least one data sequence is determined based on the encoding format indicated by the submodule option and a corresponding code block.

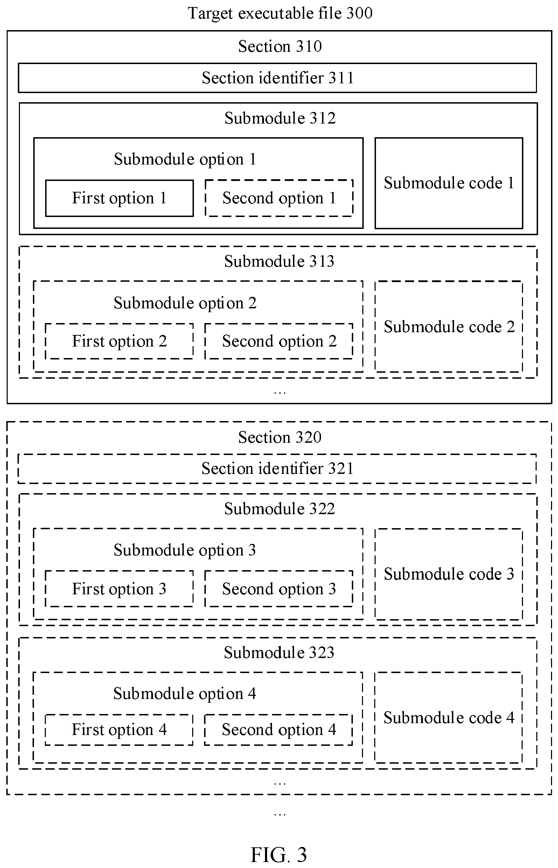

For example, the target executable file is shown in FIG. 3. FIG. 3 is a diagram of a structure of a target executable file 300 according to an embodiment of this application. As shown in FIG. 3, the target executable file 300 includes at least one section, for example, a section 310 and/or a section 320. The section 310 includes a section identifier 311 and at least one submodule (for example, a submodule 312 and/or a submodule 313). The section identifier 311 indicates a type of a code block corresponding to each submodule in the section 310. In other words, all submodules in the section 310 correspond to code blocks of a same type. The submodule 312 includes a submodule option 1 and submodule code 1. The submodule 313 includes a submodule option 2 and submodule code 2. The submodule option 1 and the submodule option 2 may be the same or different. This is not limited in embodiments of this application. The section 320 includes a section identifier 321 and at least one submodule (for example, a submodule 322 and/or a submodule 323). The section identifier 321 indicates a type of a code block corresponding to each submodule in the section 320. The section identifier 321 is different from the section identifier 311. The submodule 322 includes a submodule option 3 and submodule code 3. The submodule 323 includes a submodule option 4 and submodule code 4. The submodule option 3 and the submodule option 4 may be the same or different. This is not limited in embodiments of this application.

In some embodiments, the submodule option of the submodule includes a first option, and the first option indicates an encoding format corresponding to the submodule code of the submodule. For example, it is assumed that the target executable file is shown in FIG. 3. The submodule option 1 in the submodule 312 includes a first option 1, the submodule option 2 in the submodule 313 includes a first option 2, the submodule option 3 in the submodule 322 includes a first option 3, and the submodule option 4 in the submodule 323 includes a first option 4.

When the compilation instruction includes the first parameter, the first parameter in the compilation instruction corresponding to the first code block is a first option in a submodule option of a first submodule. The first code block is any one of the at least one code block, and the first submodule corresponds to the first code block.

Optionally, the submodule option may include any one of a first-type option, a second-type option, or a third-type option.

For example, the first-type option may indicate a specific encoding type. For example, the first-type option may indicate a type of a general intermediate representation, for example, a standard portable intermediate representation v (standard portable intermediate representation v, SPIR-V), a low level virtual machine (low level virtual machine, LLVM) intermediate representation (intermediate representation, IR) subset 1, or an LLVM IR subset 2. The second-type option and the third-type option indicate an internal structure of the submodule code. In other words, the encoding format indicated by the submodule option is a specific encoding type or an internal structure of the submodule code.

When the submodule option of the first submodule includes the first-type option, that is, when the first option in the submodule option is the first-type option, the submodule code of the first submodule includes a data sequence. The data sequence in the submodule code is determined based on the encoding type indicated by the first-type option and the first code block.

In some embodiments, when the first code block conforms to the encoding type indicated by the first-type option, the data sequence included in the submodule code of the first submodule is the same as the first code block. Alternatively, when the first code block does not conform to the encoding type indicated by the first-type option, the data sequence included in the submodule code of the first submodule is a sequence obtained by encoding the first code block based on the encoding type indicated by the first-type option. Alternatively, when the first code block does not conform to the encoding type indicated by the first-type option, the data sequence included in the submodule code of the first submodule is the same as a second code block. A function of the second code block is the same as a function of the first code block, and the second code block conforms to the encoding type indicated by the first-type option. The first code block and the second code block belong to the at least one code block in the original code file. The first submodule corresponds to the first code block, or the first submodule corresponds to the first code block and the second code block.

For example, that the first code block conforms to a first encoding type means that the first code block is a data sequence encoded based on the first encoding type. The first encoding type is any encoding type mentioned in embodiments of this application.

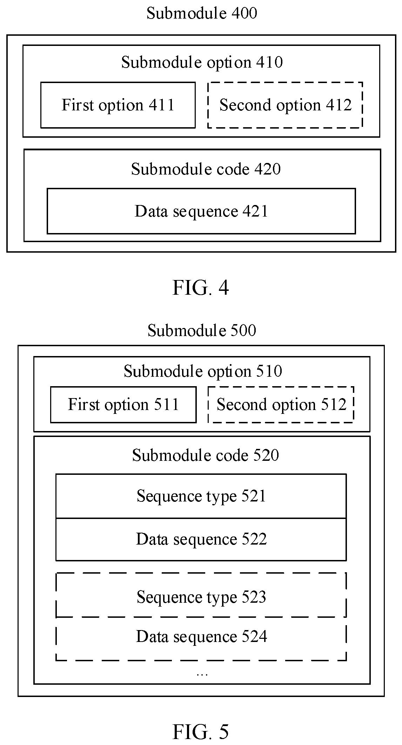

For example, the first submodule is shown in FIG. 4. FIG. 4 is a diagram of a structure of a submodule 400 according to an embodiment of this application. The submodule 400 may be any one of the submodule 312, the submodule 313, the submodule 322, or the submodule 323 in FIG. 3. As shown in FIG. 4, the submodule 400 includes a submodule option 410 and submodule code 420. The submodule option 410 includes a first option 411, and the first option 411 is the first-type option. The submodule code 420 includes a data sequence 421. The data sequence 421 is determined based on an encoding type indicated by the submodule option 410 and a code block corresponding to the submodule 400. For example, when the code block corresponding to the submodule 400 conforms to an encoding type indicated by the first option 411, the data sequence 421 is the same as the code block corresponding to the submodule 400. Alternatively, when the code block corresponding to the submodule 400 does not conform to the encoding type indicated by the first option 411, the data sequence 421 is a sequence obtained by encoding the code block corresponding to the submodule 400 based on the encoding type indicated by the first option 411. Alternatively, when the code block corresponding to the submodule 400 does not conform to the encoding type indicated by the first option 411, the data sequence 421 is the same as the second code block. The function of the second code block is the same as the function of the code block corresponding to the submodule 400, and the second code block conforms to the encoding type indicated by the first option 411. The second code block belongs to the at least one code block in the original code file.

When the submodule option of the first submodule includes the second-type option, that is, when the first option in the submodule option is the second-type option, the submodule code of the first submodule includes at least one sequence type and a data sequence corresponding to each sequence type. The sequence type indicates an encoding type corresponding to a data sequence. The data sequence is determined based on the encoding type indicated by the corresponding sequence type and the first code block.

In some embodiments, when the first code block conforms to an encoding type indicated by a first sequence type, a first data sequence included in submodule code of the first submodule is the same as the first code block. Alternatively, when the first code block does not conform to the encoding type indicated by the first sequence type, the first data sequence included in the submodule code of the first submodule is a sequence obtained by encoding the first code block based on the encoding type indicated by the first sequence type. Alternatively, when the first code block does not conform to the encoding type indicated by the first sequence type, the first data sequence included in the submodule code of the first submodule is the same as the second code block. The function of the second code block is the same as the function of the first code block, and the second code block conforms to the encoding type indicated by the first sequence type. The first code block and the second code block belong to the at least one code block in the original code file. The first submodule corresponds to the first code block, or the first submodule corresponds to the first code block and the second code block. The first sequence type belongs to the at least one sequence type, and the first data sequence corresponds to the first sequence type.

For example, the first submodule is shown in FIG. 5. FIG. 5 is a diagram of a structure of a submodule 500 according to an embodiment of this application. The submodule 500 may be any one of the submodule 312, the submodule 313, the submodule 322, or the submodule 323 in FIG. 3. As shown in FIG. 5, the submodule 500 includes a submodule option 510 and submodule code 520. The submodule option 510 includes a first option 511, and the first option 511 is the second-type option. The submodule code 520 includes at least one sequence type (for example, a sequence type 521 and/or a sequence type 523) and a data sequence (for example, a data sequence 522 and/or a data sequence 524) corresponding to each sequence type. The sequence type 521 is different from the sequence type 523. The data sequence 522 is determined based on an encoding type indicated by the sequence type 521 and a code block corresponding to the submodule 500. The data sequence 524 is determined based on an encoding type indicated by the sequence type 523 and the code block corresponding to the submodule 500.

The data sequence 522 is used as an example. When the code block corresponding to the submodule 500 conforms to the encoding type indicated by the sequence type 521, the data sequence 522 is the same as the code block corresponding to the submodule 500. Alternatively, when the code block corresponding to the submodule 500 does not conform to the encoding type indicated by the sequence type 521, the data sequence 522 is a sequence obtained by encoding the code block corresponding to the submodule 500 based on the encoding type indicated by the sequence type 521. Alternatively, when the code block corresponding to the submodule 500 does not conform to the encoding type indicated by the sequence type 521, the data sequence 522 is the same as the second code block. The function of the second code block is the same as a function of the code block corresponding to the submodule 500, and the second code block conforms to the encoding type indicated by the sequence type 521. The second code block belongs to the at least one code block in the original code file. It should be understood that a manner of determining the data sequence 524 is similar to a manner of determining the data sequence 522, and details are not described herein again.

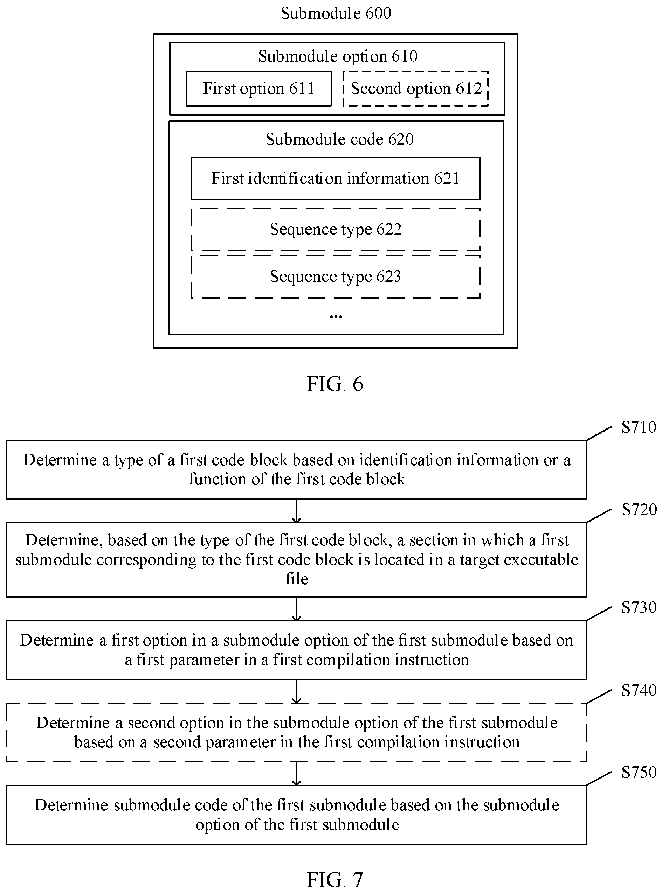

When the submodule option of the first submodule includes the third-type option, that is, when the first option in the submodule option is the third-type option, the submodule code of the first submodule includes first identification information, or the submodule code of the first submodule includes first identification information and at least one sequence type. The first identification information indicates, in a code database, the at least one data sequence corresponding to the first code block. The sequence type indicates an encoding type corresponding to a data sequence. The first submodule is shown in FIG. 6.

FIG. 6 is a diagram of a structure of a submodule 600 according to an embodiment of this application. The submodule 600 may be any one of the submodule 312, the submodule 313, the submodule 322, or the submodule 323 in FIG. 3. As shown in FIG. 6, the submodule 600 includes a submodule option 610 and submodule code 620. The submodule option 610 includes a first option 611, and the first option 611 is the third-type option. The submodule code 620 includes first identification information 621. Alternatively, the submodule code 620 includes the first identification information 621 and at least one sequence type (for example, a sequence type 622 and/or a sequence type 623). The first identification information indicates at least one data sequence corresponding to a code block corresponding to the submodule 600 in the code database, and each of the at least one data sequence is determined based on an encoding type indicated by a sequence type and the code block corresponding to the submodule 600. The sequence type 622 or the sequence type 623 is a sequence type corresponding to a data sequence of the code block corresponding to the submodule 600 in the code database. The sequence type 622 is different from the sequence type 623, and data sequences corresponding to the sequence type 622 and the sequence type 623 are different.

For example, it is assumed that, in the code database, the at least one data sequence corresponding to the code block corresponding to the submodule 600 includes a data sequence 624 (not shown in the figure), and the data sequence 624 corresponds to the sequence type 622. When the code block corresponding to the submodule 600 conforms to an encoding type indicated by the sequence type 622, the data sequence 624 is the same as the code block corresponding to the submodule 600. Alternatively, when the code block corresponding to the submodule 600 does not conform to the encoding type indicated by the sequence type 622, the data sequence 624 is a sequence obtained by encoding the code block corresponding to the submodule 600 based on the encoding type indicated by the sequence type 622. Alternatively, when the code block corresponding to the submodule 600 does not conform to the encoding type indicated by the sequence type 622, the data sequence 624 is the same as the second code block. A function of the second code block is the same as a function of the code block corresponding to the submodule 600, and the second code block conforms to the encoding type indicated by the sequence type 622. The second code block belongs to the at least one code block in the original code file. It should be understood that a manner of determining a data sequence, other than the data sequence 624, in the at least one data sequence is similar to a manner of determining the data sequence 624, and details are not described herein again.

For example, the first compute node determines, based on the at least one sequence type, the at least one data sequence corresponding to the first code block. Each data sequence corresponds to one sequence type. The first compute node transmits the at least one sequence type and the at least one data sequence corresponding to the first code block to the code database, to obtain the first identification information of the first submodule.

For example, the first compute node may transmit identification information of the first code block, the at least one sequence type, and the at least one data sequence corresponding to the first code block to the code database, to obtain the first identification information of the first submodule. The identification information of the first code block is, for example, a name or a number of the first code block.

For example, each of the at least one sequence type is a sequence type capable of being generated by the first compute node. In other words, before S230, the first compute node determines an encoding type indicated by each sequence type.

For example, a part of the at least one sequence type is not a sequence type capable of being run by the first compute node. That is, a data sequence corresponding to the part of the at least one sequence type cannot be run on the first compute node. Alternatively, each of the at least one sequence type is a sequence type capable of being run by the first compute node. That is, the data sequence corresponding to each sequence type can be run on the first compute node.

When the first code block is an accelerator code block, the submodule option of the first submodule further includes a second option. The second option indicates that the submodule code of the first submodule is intermediate representation code or device-specific code. When the submodule code of the first submodule is the intermediate representation code, the submodule code is run by the accelerator after being translated into the device-specific code. The first submodule is shown in FIG. 3, FIG. 4, FIG. 5, or FIG. 6. As shown in FIG. 3, the submodule option 1 in the submodule 312 includes the first option 1 and a second option 1, the submodule option 2 in the submodule 313 includes the first option 2 and a second option 2, the submodule option 3 in the submodule 322 includes the first option 3 and a second option 3, and the submodule option 4 in the submodule 323 includes the first option 4 and a second option 4. As shown in FIG. 4, the submodule option 410 in the submodule 400 includes the first option 411 and a second option 412. As shown in FIG. 5, the submodule 510 in the submodule 500 includes the first option 511 and a second option 512. As shown in FIG. 6, the submodule option 610 in the submodule 600 includes the first option 611 and a second option 612.

When the compilation instruction includes the second parameter, the second parameter in the compilation instruction corresponding to the first code block is the same as the second option in the submodule option of the first submodule.

Optionally, in the target executable file, submodules corresponding to code blocks of a same type are located in a same section.

Optionally, when the at least one code block includes one or more accelerator code blocks, the target executable file further includes an accelerator function section, and the accelerator function section is used to declare functions corresponding to the one or more accelerator code blocks. A section identifier of the accelerator function section is different from a section identifier of a section including a submodule.

In this embodiment of this application, the compilation instruction indicates the encoding format corresponding to each code block, and the code block is encoded into a submodule. In the submodule, an encoding format corresponding to the submodule is indicated by a submodule option, and submodules corresponding to code blocks of a same type are set in a same section. Therefore, the at least one code block is encoded in a standardized manner, to generate the target executable file. Because all submodules included in the target executable file are organized in a standardized form, when the target executable file is executed across platforms, a to-be-run data sequence in the target executable file can be quickly determined, to run the data sequence, so as to improve execution efficiency of a compute task.

FIG. 7 is a schematic flowchart of a data processing method according to an embodiment of this application. The method in FIG. 7 is performed by a first compute node, and the first compute node may be any development node in FIG. 1. The method in FIG. 7 includes the following steps.

S710: Determine a type of a first code block based on identification information or a function of the first code block.

After obtaining at least one original code file, a first compute node traverses code blocks in each original code file. After determining the first code block, the first compute node determines the type of the first code block based on the identification information or the function of the first code block. The first code block is any code block in the at least one original code file.

For example, the identification information of the first code block is used to identify the type of the first code block. The identification information is, for example, information such as a name or a label of the code block.

Optionally, the type of the first code block is any one of the following: an accelerator code block, an AI model code block, or a host shared library code block. The accelerator code block is used for running on an accelerator. The AI model code block is used for training or inference of an AI model. The host shared library code block is used for assisting in running the accelerator code block and/or the AI model code block.

S720: Determine, based on the type of the first code block, a section in which a first submodule corresponding to the first code block is located in a target executable file.

After determining the type of the first code block, the first compute node determines, based on the type of the first code block, the section in which the first submodule corresponding to the first code block is located in the target executable file.

The target executable file includes at least one section, and each section includes a section identifier and at least one submodule. Each submodule corresponds to one code block. All submodules in each section correspond to code blocks of a same type. The section identifier indicates the type of the code block corresponding to the section. Each submodule includes a submodule option and submodule code. The submodule option indicates an encoding format corresponding to the submodule code. The submodule code includes at least one data sequence or identification information corresponding to the at least one data sequence, and each of the at least one data sequence is determined based on the encoding format indicated by the submodule option and a corresponding code block.

In some embodiments, submodules corresponding to code blocks of a same type in the at least one original code file are located in a same section.

For example, it is assumed that a structure of the target executable file is shown in FIG. 3. Each submodule corresponding to the accelerator code block in the at least one original file is located in the section 310. The section identifier 311 in the section 310 indicates that the section 310 is an accelerator code section, and a code block corresponding to each submodule in the accelerator code section is an accelerator code block. Each submodule corresponding to the AI model code block in the at least one original file is located in the section 320. The section identifier 321 in the section 320 indicates that the section 320 is an AI model code section, and a code block corresponding to each submodule in the AI model code section is an AI model code block. The target executable file 300 may further include a section 330 (not shown in the figure). Each submodule corresponding to the host shared library code block in the at least one original code file is located in the section 330. A section identifier 331 (not shown in the figure) in the section 330 indicates that the section 330 is a host shared library code section, and a code block corresponding to each submodule in the host shared library code section is a host shared library code block. In other words, the target executable file includes at least one of the following sections: the accelerator code section, the AI model code section, or the host shared library code section.

In some embodiments, the target executable file further includes an accelerator function section. The accelerator function section is used to declare a function corresponding to the accelerator code block in the at least one original file.

In some embodiments, the target executable file further includes at least one of the following sections: a custom (custom) section, a type (type) section, an import (import) section, a function (function) section, a table (table) section, a memory (memory) section, a global (global) section, an export (export) section, a start (start) section, an element (element) section, a code (code) section, a data (data) section, or a data count (data count) section. The custom section is used to provide a customized extension function and is defined by a developer. The type section is used to define a type. The import section is used to import functions, tables, memory, global variables, and the like. The function section is used to declare a function. The table section indicates a value of a specific element type. The memory section indicates a memory region. The global section is used to declare a global variable. The export section is used to export functions, tables, memory, global variables, and the like. The start section indicates a start function index. The element section is used to declare initialization data of an array. The code section includes local variables and a function body. The data section is used to store data. The data count section indicates a length of the data stored in the data section.

For example, the target executable file is, for example, a Wasm module.

For example, sections included in the target executable file are shown in Table 1.

**Table 1 Sections included in the target executable file**

| Section identifier | Section |
|---|---|
| 0 | custom section |
| 1 | type section |
| 2 | import section |
| 3 | function section |
| 4 | table section |
| 5 | memory section |
| 6 | global section |
| 7 | export section |
| 8 | start section |
| 9 | element section |
| 10 | code section |
| 11 | data section |
| 12 | data count section |
| k1 | Accelerator function section |
| k2 | Accelerator code section |
| k3 | AI model code section |
| k4 | Host shared library code section |

As shown in Table 1, the target executable file includes 17 sections, and each section has a different section identifier. For example, the target executable file includes all or part of the sections in Table 1. A type of a specific section or a quantity of specific sections included in the target executable file is not limited in embodiments of this application.

It should be understood that the section identifier in Table 1 is merely used as an example for description, and the section identifier may alternatively be represented as a combination of at least one character. The at least one character includes a text, a number, a letter, a symbol, and the like.

In some embodiments, an encoding format of the accelerator function section in the target executable file is the same as that of the function section.

In some embodiments, the target executable file does not include the accelerator function section. When the target executable file does not include the accelerator function section, the function section is further used to declare a function corresponding to the accelerator code block in the at least one original file. In this case, a vector length included in the function section is a sum of a vector length included in the code section and a vector length included in the accelerator code section. That is, a quantity of functions declared in the function section is a sum of a quantity of functions included in the code section and a quantity of functions included in the accelerator code section.

For example, it is assumed that the first code block is the accelerator code block. In this case, the target executable file includes the accelerator code section, and the first submodule corresponding to the first code block is located in the accelerator code section. It is assumed that the first code block is the AI model code block. In this case, the target executable file includes the AI model code section, and the first submodule corresponding to the first code block is located in the AI model code section. It is assumed that the first code block is the host shared library code block. In this case, the target executable file includes the host shared library code section, and the first submodule corresponding to the first code block is located in the host shared library code section.

In some embodiments, the accelerator code section is an accelerator code vector. The accelerator code vector includes at least one element, and each element is a submodule.

For example, the accelerator code vector further includes a vector length. The vector length indicates a quantity of submodules in the accelerator code vector. For example, the vector length is represented by an integer. The integer is, for example, a 32-bit or 64-bit unsigned integer.

For example, each element (that is, each submodule) in the accelerator code vector includes a submodule option and submodule code. The submodule option includes a first option, and the first option indicates an encoding format corresponding to the submodule code. The first option is represented by one byte.

For example, the submodule option further includes a second option. The second option indicates that the submodule code is intermediate representation code or device-specific code. The second option is represented by one byte.

For example, each element (that is, each submodule) in the accelerator code vector further includes a submodule code length. The submodule code length indicates a length of the submodule code. The submodule code length is represented by an integer in bytes. The integer is, for example, a 32-bit or 64-bit unsigned integer.

In some embodiments, the AI model code section is an AI model vector. The AI model vector includes at least one element, and each element is a submodule.

For example, the AI model vector further includes a vector length. The vector length indicates a quantity of submodules in the AI model vector. For example, the vector length is represented by an integer. The integer is, for example, a 32-bit or 64-bit unsigned integer.

For example, each element (that is, each submodule) in the AI model vector includes a submodule option and submodule code. The submodule option includes a first option, and the first option indicates an encoding format corresponding to the submodule code. The first option is represented by one byte.

For example, each element (that is, each submodule) in the AI model vector further includes second identification information. The second identification information indicates a name, a number, or the like of a code block corresponding to the submodule. The second identification information is represented by a byte vector. The byte vector is a vector formed by using each byte (byte) of corresponding data as an element.

For example, each element (that is, each submodule) in the AI model vector further includes a submodule code length. The submodule code length indicates a length of the submodule code. The submodule code length is represented by an integer in bytes. The integer is, for example, a 32-bit or 64-bit unsigned integer.

In some embodiments, the host shared library code section is a host shared library code vector. The host shared library code vector includes at least one element, and each element is a submodule.

For example, the host shared library code vector further includes a vector length. The vector length indicates a quantity of submodules in the host shared library code vector. For example, the vector length is represented by an integer. The integer is, for example, a 32-bit or 64-bit unsigned integer.

For example, each element (that is, each submodule) in the host shared library code vector includes a submodule option and submodule code. The submodule option includes a first option, and the first option indicates an encoding format corresponding to the submodule code. The first option is represented by one byte.

For example, each element (that is, each submodule) in the host shared library code vector further includes second identification information. The second identification information indicates a name, a number, or the like of a code block corresponding to the submodule. The second identification information is represented by a byte vector. The byte vector is a vector formed by using each byte of corresponding data as an element.

For example, each element (that is, each submodule) in the host shared library code vector further includes a submodule code length. The submodule code length indicates a length of the submodule code. The submodule code length is represented by an integer in bytes. The integer is, for example, a 32-bit or 64-bit unsigned integer.

S730: Determine a first option in a submodule option of the first submodule based on a first parameter in a first compilation instruction.

After the first compute node determines the section in which the first submodule corresponding to the first code block is located in the target executable file, the first compute node determines, based on the first compilation instruction corresponding to the first code block, an encoding format corresponding to the first code, that is, determines a structure of the first submodule.

Optionally, the first compilation instruction includes the first parameter. The first parameter indicates the first option in the submodule option of the first submodule. In other words, the first option in the submodule option of the first submodule is the same as the first parameter.

Optionally, the first parameter is any one of the following: a first-type option, a second-type option, or a third-type option. In other words, the first option in the submodule option of the first submodule is any one of the following: the first-type option, the second-type option, or the third-type option.

In some embodiments, the first-type option indicates a specific encoding type. For example, the first-type option is a name of an encoding type. Alternatively, the first-type option is an index of an encoding type in a first encoding type set. The first encoding type set includes at least one encoding type. The first-type option may be represented by at least one character. The at least one character includes a text, a number, a letter, a symbol, and the like.

For example, the first-type option is any one of the following: an SPIR-V, an LLVM IR 1, an LLVM IR 2, and the like. The LLVM IR 1 and the LLVM IR 2 are merely example names of an LLVM IR subset or full set. A name of a specific encoding type is not limited in embodiments of this application.

For example, the first encoding type set is shown in Table 2.

**Table 2 First encoding type set**

| Index | Encoding type |
|---|---|
| 1 | Encoding type 1 |
| 2 | Encoding type 2 |
| 3 | Encoding type 3 |

As shown in Table 2, the first encoding type set includes the encoding type 1, the encoding type 2, and the encoding type 3. When the first-type option is 1, the first-type option indicates the encoding type 1. When the first parameter is 1, the first option in the submodule option of the first submodule is 1, and submodule code of the first submodule is determined based on the encoding type 1 and the first code block.

It should be understood that the encoding type 1, the encoding type 2, and the encoding type 3 in Table 2 are different encoding types. The encoding type 1 to the encoding type 3 may be any one of the SPIR-V, the LLVM IR 1, or the LLVM IR 2, where the LLVM IR 1 and the LLVM IR 2 are merely example names of the LLVM IR subset or full set. Alternatively, one or more of the encoding type 1 to the encoding type 3 are customized encoding types. It should be further understood that Table 2 is merely a possible example of the first encoding type set. The index in Table 2 may be represented as a combination of at least one character. The at least one character includes a text, a number, a letter, a symbol, and the like. It should be further understood that the encoding type in Table 2 may further include more encoding types. A specific type of the encoding type, an index of the encoding type, a name of the encoding type, or a quantity of encoding types is not limited in embodiments of this application.

In some embodiments, the second-type option indicates that the submodule code of the first submodule includes at least one sequence type and a data sequence corresponding to each sequence type. The sequence type indicates an encoding type corresponding to a data sequence, and the data sequence is determined based on the encoding type indicated by the sequence type and a corresponding code block. The second-type option may be represented by at least one character. The at least one character includes a text, a number, a letter, a symbol, and the like.

For example, it is assumed that the second-type option is represented by 11. When the first parameter is 11, the first option in the submodule option of the first submodule is 11, and the submodule code of the first submodule includes at least one sequence type and a data sequence corresponding to each sequence type.

In some embodiments, the third-type option indicates that the submodule code of the first submodule includes first identification information. Alternatively, the third-type option indicates that the submodule code of the first submodule includes first identification information and at least one sequence type. The first identification information indicates, in a code database, at least one data sequence corresponding to a code block corresponding to a submodule. The sequence type indicates an encoding type corresponding to a data sequence. The third-type option may be represented by at least one character. The at least one character includes a text, a number, a letter, a symbol, and the like.

For example, it is assumed that the third-type option is represented by 12. When the first parameter is 12, the first option in the submodule option of the first submodule is 12, and submodule code of the first submodule includes the first identification information. It is assumed that the third-type option is represented by 13. When the first parameter is 13, the first option in the submodule option of the first submodule is 13, and the submodule code of the first submodule includes the first identification information and at least one sequence type.

In some embodiments, each of the at least one sequence type is a sequence type capable of being generated by the first compute node. In other words, the first compute node may encode the first code block based on an encoding type indicated by each sequence type, to obtain the at least one data sequence in the submodule code of the first submodule, and/or the first compute node may determine a code block that conforms to the encoding type indicated by each sequence type, and a function of the code block is the same as a function of the first code block, to obtain the at least one data sequence in the submodule code of the first submodule.

For example, each sequence type is a sequence type preset by the first compute node. Alternatively, each sequence type is a sequence type specified by a developer.

For example, each of the at least one sequence type is a sequence type capable of being run by the first compute node. In other words, the first compute node may run a data sequence encoded based on the encoding type indicated by each sequence type. Alternatively, one or more of the at least one sequence type are sequence types incapable of being run by the first compute node. In other words, the first compute node cannot run a data sequence encoded based on an encoding type indicated by the one or more sequence types.

Optionally, when the first code block is the accelerator code block, the first compilation instruction further includes a second parameter. The second parameter indicates that the submodule code of the first submodule is the intermediate representation code or the device-specific code. The second parameter is the same as the second option in the submodule option of the first submodule. The second option indicates that the submodule code of the first submodule is the intermediate representation code or the device-specific code. When the submodule code is the intermediate representation code, the submodule code is run by the accelerator after being translated into the device-specific code. The accelerator is an accelerator that adapts to the data sequence, that is, the accelerator may parse and run the device-specific code corresponding to the submodule code.

Optionally, the first compute node may perform S740 after S730 or before S730.

S740: Determine the second option in the submodule option of the first submodule based on the second parameter in the first compilation instruction.

After the first compute node determines that the first code block is the accelerator code block, the first compute node determines the second option in the submodule option of the first submodule based on the second parameter in the first compilation instruction. The second option is the same as the second parameter. The second parameter indicates that the submodule code of the first submodule is the intermediate representation code or the device-specific code.

In some embodiments, the intermediate representation code or the device-specific code is represented by at least one character. The at least one character includes a text, a number, a letter, a symbol, and the like.

For example, it is assumed that the intermediate representation code is represented by 21. When the second parameter is 21, the second option in the submodule option of the first submodule is 21, and the submodule code of the first submodule is the intermediate representation code. It is assumed that the device-specific code is represented by 22. When the second parameter is 22, the second option in the submodule option of the first submodule is 22, and the submodule code of the first submodule is the device-specific code.

Optionally, the first compute node determines, based on the second option in the submodule option of the first submodule, a specific encoding type indicated by the first option in the submodule option of the first submodule. In other words, different second options enable the first option to indicate different encoding types.

For example, it is assumed that the first option in the submodule option of the first submodule is the first type option, and a value of the first option is 1. When the second option indicates that the submodule code of the first submodule is the intermediate representation code, the encoding type indicated by the first option is the encoding type 1. When the second option indicates that the submodule code of the first submodule is the device-specific code, the encoding type indicated by the first option is the encoding type 2.

Optionally, the first compute node does not need to determine, based on the second option in the submodule option of the first submodule, a specific encoding type indicated by the first option in the submodule option of the first submodule. In other words, different second options do not affect the encoding type indicated by the first option. It should be noted that, the first option corresponding to different second options has different values, to avoid ambiguity.

For example, it is assumed that the first option in the submodule option of the first submodule is the first-type option, and a value of the first option is 1. When the second option indicates that the submodule code of the first submodule is the intermediate representation code, the encoding type indicated by the first option is the encoding type 1. When the second option indicates that the submodule code of the first submodule is the device-specific code, the encoding type indicated by the first option is the encoding type 1.

For example, when the second option indicates that the submodule code of the first submodule is the intermediate representation code, the first option in the submodule option of the first submodule is the first-type option. When the second option indicates that the submodule code of the first submodule is the device-specific code, the first option in the submodule option of the first submodule is the second-type option or the third-type option.

S750: Determine the submodule code of the first submodule based on the submodule option of the first submodule.

After determining the submodule option of the first submodule, the first compute node determines a structure of the submodule code of the first submodule based on an encoding format indicated by the submodule option of the first submodule. After determining the structure of the submodule code, the first compute node determines, based on the encoding type indicated by the submodule option or the sequence type, at least one data sequence in the submodule code or identification information corresponding to the at least one data sequence.

Optionally, when the first option in the submodule option of the first submodule is the first-type option, the submodule code includes one data sequence.

When the first code block conforms to the encoding type indicated by the first-type option, the data sequence included in the submodule code of the first submodule is the same as the first code block. In other words, the first compute node uses the first code block as the data sequence in the submodule code. The first submodule corresponds to the first code block.

When the first code block does not conform to the encoding type indicated by the first-type option, the data sequence included in the submodule code of the first submodule is a sequence obtained by encoding the first code block based on the encoding type indicated by the first-type option. In other words, the first compute node encodes the first code block based on the encoding type indicated by the first-type option, to determine the data sequence in the submodule code. Alternatively, when the first code block does not conform to the encoding type indicated by the first-type option, the data sequence included in the submodule code of the first submodule is the same as a second code block. A function of the second code block is the same as a function of the first code block, and the second code block conforms to the encoding type indicated by the first-type option. In other words, the first compute node searches an original code file for the second code block, and uses the second code block as the data sequence in the submodule code. The first code block and the second code block belong to the at least one code block in the original code file. The first submodule corresponds to the first code block and the second code block.

For example, that the first code block conforms to the first encoding type means that the first code block is a data sequence encoded based on the first encoding type. The first encoding type is any encoding type mentioned in embodiments of this application.

Optionally, when the first option in the submodule option of the first submodule is the second-type option, the submodule code includes at least one sequence type and a data sequence corresponding to each sequence type.

When the first code block conforms to the encoding type indicated by the first sequence type, a first data sequence included in the submodule code of the first submodule is the same as the first code block. In other words, the first compute node uses the first code block as the first data sequence in the submodule code. The first sequence type belongs to the at least one sequence type in the submodule code, and the first data sequence corresponds to the first sequence type. The first submodule corresponds to the first code block.

When the first code block does not conform to the encoding type indicated by the first sequence type, the first data sequence included in the submodule code of the first submodule is a sequence obtained by encoding the first code block based on the encoding type indicated by the first sequence type. In other words, the first compute node encodes the first code block based on the encoding type indicated by the first sequence type, to determine the first data sequence. Alternatively, when the first code block does not conform to the encoding type indicated by the first sequence type, the first data sequence included in the submodule code of the first submodule is the same as the second code block. The function of the second code block is the same as the function of the first code block, and the second code block conforms to the encoding type indicated by the first sequence type. In other words, the first compute node searches an original code file for the second code block, and uses the second code block as the first data sequence in the submodule code. The first code block and the second code block belong to the at least one code block in the original code file. The first submodule corresponds to the first code block and the second code block.

In some embodiments, the sequence type included in the submodule code is a name of an encoding type. Alternatively, the sequence type included in the submodule code is an index of an encoding type in a second encoding type set. The second encoding type set includes at least one encoding type. The sequence type may be represented as a combination of at least one character. The at least one character includes a text, a number, a letter, a symbol, and the like.

For example, the sequence type is any one of the following: an intermediate representation 1, an intermediate representation 2, a machine instruction 1, a machine instruction 2, or the like.

For example, the second encoding type set is shown in Table 3.

**Table 3 Second encoding type set**

| Index | Encoding type |
|---|---|
| 1 | Encoding type 4 |
| 2 | Encoding type 5 |
| 3 | Encoding type 6 |

As shown in Table 3, the second encoding type set includes the encoding type 4, the encoding type 5, and the encoding type 6. When the sequence type is 1, the sequence type indicates the encoding type 4. When the sequence type is 1, the data sequence corresponding to the sequence type is a data sequence that conforms to the encoding type 4.

It should be understood that the encoding type 4, the encoding type 5, and the encoding type 6 in Table 3 are different encoding types. One or more of the encoding type 4, the encoding type 5, or the encoding type 6 are encoding types defined by a specific vendor or organization, or are customized encoding types. It should be further understood that Table 3 is merely a possible example of the second encoding type set. The index in Table 3 may be represented as a combination of at least one character. The at least one character includes a text, a number, a letter, a symbol, and the like. It should be further understood that the encoding type in Table 3 may further include more encoding types. A specific type of the encoding type, an index of the encoding type, a name of the encoding type, or a quantity of encoding types is not limited in embodiments of this application.

In some embodiments, the submodule code is a submodule code vector. The submodule code vector includes at least one element, and each element includes a sequence type and a data sequence corresponding to the sequence type.

For example, the sequence type is represented by an integer. The integer is one of the following: an 8-bit unsigned integer, a 16-bit unsigned integer, a 32-bit unsigned integer, or a 64-bit unsigned integer.

For example, each element in the submodule code vector further includes a data sequence length. The data sequence length indicates a length of a data sequence in each element. The data sequence length is represented by an integer in bytes. The integer is, for example, a 32-bit or 64-bit unsigned integer.

For example, the data sequence is represented as a byte vector. The byte vector is a vector formed by using each byte in the data sequence as an element.

Optionally, when the first option in the submodule option of the first submodule is the third-type option, the submodule code includes the first identification information. Alternatively, the submodule code includes the first identification information and at least one sequence type.

In some embodiments, the first compute node determines, based on the at least one sequence type, the at least one data sequence corresponding to the first code block. Each data sequence corresponds to one sequence type. The first compute node transmits the at least one sequence type and the at least one data sequence corresponding to the first code block to the code database, to obtain the first identification information of the submodule corresponding to the first code block.

When the first code block conforms to the encoding type indicated by the first sequence type, the first compute node uses the first code block as the first data sequence corresponding to the first code block. The first data sequence corresponds to the first sequence type, and the first sequence type belongs to the at least one sequence type.

When the first code block does not conform to the encoding type indicated by the first sequence type, the first compute node encodes the first code block based on the encoding type indicated by the first sequence type, to determine the first data sequence. Alternatively, the first compute node searches an original code file for the second code block, and uses the second code block as the first data sequence corresponding to the first code block. The function of the second code block is the same as the function of the first code block, and the second code block conforms to the encoding type indicated by the first sequence type.

For example, the first compute node transmits a 2-tuple list corresponding to the first code block to the code database, to obtain the first identification information corresponding to the first code block from the code database. The 2-tuple list includes at least one 2-tuple, and each 2-tuple includes a sequence type and a data sequence corresponding to the sequence type.

For example, the first compute node transmits the identification information of the first code block and the 2-tuple list corresponding to the first code block to the code database, to obtain the first identification information corresponding to the first code block. Alternatively, the first compute node transmits a 3-tuple list corresponding to the first code block to the code database, to obtain the first identification information corresponding to the first code. The 3-tuple list includes at least one 3-tuple, and each 3-tuple includes the identification information of the first code block, a sequence type, and a data sequence corresponding to the sequence type.

For example, the identification information of the first code block is a name, a number, or the like of the first code block.

For example, the code database includes at least one data sequence corresponding to each of one or more code blocks.

For example, the first compute node remotely accesses the code database through a network. In other words, the first compute node uploads the at least one sequence type and the at least one data sequence of the first code block and the identification information of the first code block to the code database through the network, and obtains, through the network, the first identification information returned by the code database. Alternatively, the first compute node uploads the at least one sequence type and the at least one data sequence of the first code block to the code database through the network, and obtains, through the network, the first identification information returned by the code database.

In some embodiments, after determining the first identification information of the first code block, the first compute node determines the submodule code based on the first identification information of the first code block and the at least one sequence type.

In some embodiments, the submodule code is a submodule code vector. The submodule code vector includes one element, and the element is the first identification information. Alternatively, the submodule code vector includes two elements, and the two elements are respectively the first identification information and a sequence type vector. The sequence type vector includes at least one element, and each element is a sequence type.

For example, the first identification information is represented by an integer. The integer is, for example, a 32-bit or 64-bit unsigned integer. Alternatively, the first identification information is represented by a byte vector, and the byte vector is a vector formed by using each byte in the first identification information as an element.

For example, the sequence type is represented by an integer. The integer is one of the following: an 8-bit unsigned integer, a 16-bit unsigned integer, a 32-bit unsigned integer, or a 64-bit unsigned integer.

After determining a structure of the first submodule corresponding to the first code block, the first compute node determines the at least one data sequence corresponding to the first code block or identification information of the at least one data sequence, to generate the first submodule. The first compute node performs the method in FIG. 7 on each code block in the at least one original code file, to generate at least one submodule, so as to generate the target executable file.

Optionally, the first compute node generates the accelerator function section in the target executable file based on an encoding format of the accelerator function section and a function or function declaration in the accelerator code block in the at least one original code file.

Optionally, the first compute node generates the function section in the target executable file based on an encoding format of the function section and a function or function declaration in the accelerator code block in the at least one original code file.

According to the method in this embodiment of this application, a section in which a submodule of an encoded code block is located in the target executable file is determined based on a type of the code block, and a structure of the submodule corresponding to the code block is determined based on a compilation instruction, so that the submodule is generated, and an encoding format corresponding to the submodule is indicated in the submodule through a submodule option. According to the method in this embodiment of this application, the at least one code block is encoded in a standardized manner, to generate the target executable file. Because all submodules included in the target executable file are organized in a standardized form, when the target executable file is executed across platforms, a to-be-run data sequence in the target executable file can be quickly determined, to run the data sequence, so as to improve execution efficiency of a compute task.

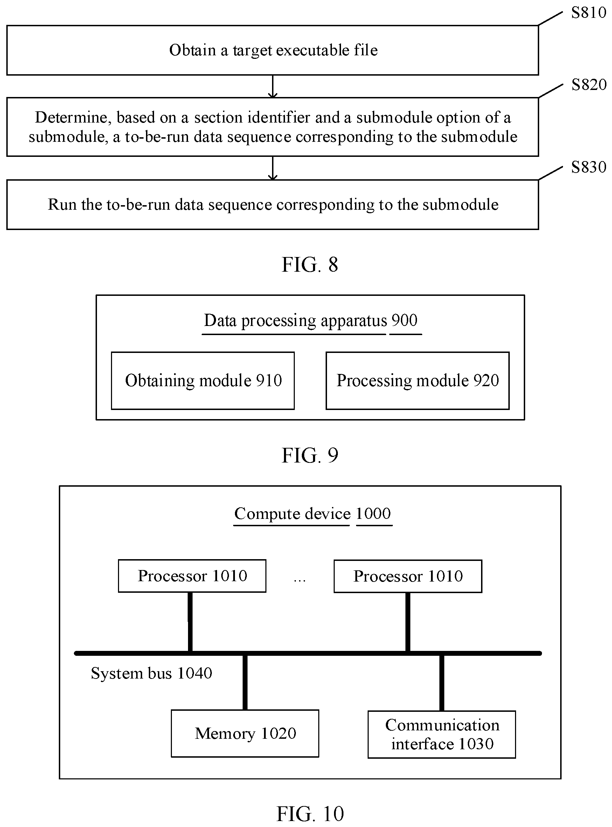

FIG. 8 is a schematic flowchart of a data processing method according to an embodiment of this application. The method in FIG. 8 is performed by a second compute node, and the second compute node may be any execution node in FIG. 1. The second compute node and the first compute node may be a same compute node or different compute nodes. This is not limited in embodiments of this application. The method in FIG. 8 includes the following steps.

S810: Obtain a target executable file.

The second compute node obtains the target executable file, where the target executable file corresponds to at least one original code file. Each original code file includes at least one code block, and each code block includes at least one code statement. A code language for compiling the original code file is not limited in embodiments of this application, for example, C, C++, or Rust.

For example, a type of the code block in the original code file includes an accelerator code block, an AI model code block, or a host shared library code block. The accelerator code block is used for running on an accelerator. The AI model code block is used for training or inference of an AI model. The host shared library code block is used for assisting in running the accelerator code block and/or the AI model code block. For descriptions of the host shared library code block, refer to the descriptions in S210.

For example, each code block may include a function, a method, a class, a package, an artificial neural network, or the like.

The target executable file includes at least one section, and each section includes a section identifier and at least one submodule. Each submodule corresponds to one code block. All submodules in the section correspond to code blocks of a same type. The section identifier indicates the type of the code block corresponding to the section. Each submodule includes a submodule option and submodule code. The submodule option indicates an encoding format corresponding to the submodule code. The submodule code includes at least one data sequence or identification information corresponding to the at least one data sequence, and each of the at least one data sequence is determined based on the encoding format indicated by the submodule option and a corresponding code block.

S820: Determine, based on the section identifier and the submodule option of the submodule, a to-be-run data sequence corresponding to the submodule.

After obtaining the target executable file, the second compute node determines, based on the section identifier in the target executable file, the type of the code block corresponding to each submodule in each section. The second compute node determines a structure of the submodule code of the submodule based on the submodule option of the submodule, to determine the to-be-run data sequence corresponding to each submodule.

Optionally, when a section identifier of a first section indicates that the first section is an accelerator code section, a first code block corresponding to a first submodule is an accelerator code block. The first section is a section in which the first submodule is located. Similarly, when the section identifier of the first section indicates that the first section is an AI model code section, the first code block corresponding to the first submodule is an AI model code block. When the section identifier of the first section indicates that the first section is a host shared library code section, the first code block corresponding to the first submodule is a host shared library code block.

When the first section is the accelerator code section, the first submodule includes a submodule option and submodule code. The submodule option includes a first option. Alternatively, the submodule option includes the first option and a second option. When the first section is the AI model code section, the first submodule includes a submodule option and submodule code. The submodule option includes a first option. When the first section is the host shared library code section, the first submodule includes a submodule option and submodule code. The submodule option includes a first option. For the first option and the second option, refer to the descriptions in FIG. 2 or FIG. 7.

When the first option in the submodule option of the first submodule is a first-type option, the submodule code of the first submodule includes a data sequence. The data sequence is determined based on an encoding type indicated by the first-type option and the first code block. In other words, the data sequence is a data sequence, corresponding to the first code block, conforming to the encoding type indicated by the first-type option.

When the first option in the submodule option of the first submodule is the first-type option, the second compute node determines, based on the encoding type indicated by the first-type option, whether to be capable of running the encoding type. When the second compute node is capable of running the encoding type indicated by the first-type option, it is determined that the data sequence in the submodule code is a to-be-run data sequence corresponding to the first submodule. When the second compute node is incapable of running the encoding type indicated by the first-type option, an alert is sent.

For example, that the alert is sent includes: sending alert information to a third compute node, where the alert information indicates that the encoding type capable of being run by the second compute node does not match an encoding type of the data sequence in the target executable file.

For example, after the second compute node sends the alert, the second compute node stops running of the submodule or the target executable file.

When the first option in the submodule option of the first submodule is a second-type option, the submodule code of the first submodule includes at least one sequence type and a data sequence corresponding to each sequence type. The sequence type indicates an encoding type corresponding to a data sequence, and the data sequence is determined based on the encoding type indicated by the corresponding sequence type and the first code block. In other words, the first data sequence is a data sequence, corresponding to the first code block, conforming to an encoding type indicated by a first sequence type. The first sequence type belongs to the at least one sequence type, and the first data sequence corresponds to the first sequence type.

When the first option in the submodule option of the first submodule is the second-type option, the second compute node determines, based on the encoding format indicated by the submodule option, the at least one sequence type included in the submodule code. The second compute node determines a preset sequence type, and determines whether the at least one sequence type included in the submodule code includes the preset sequence type. In other words, the second compute node determines whether the preset sequence type is included in all sequence types included in the submodule code. When the submodule code includes the preset sequence type, the second compute node determines that the data sequence corresponding to the preset sequence type is the to-be-run data sequence corresponding to the first submodule. When the submodule code does not include the preset sequence type, the second compute node sends an alert, or the second compute node repeats the foregoing method after re-determining the preset sequence type.

For example, the preset sequence type is the sequence type capable of being run by the second compute node. That is, a data sequence corresponding to the preset sequence type may be run on the second compute node.

When the second compute node is capable of running only one sequence type, the sequence type is the preset sequence type.

When the second compute node is capable of running N sequence types, the second compute node determines a 1^{st} sequence type from the N sequence types as the preset sequence type. N is a positive integer greater than 1. The second compute node determines whether the submodule code of the first submodule includes the preset sequence type. When the second compute node determines that the submodule code of the first submodule does not include the preset sequence type, the second compute node determines, as the preset sequence type, an n^{th} sequence type from the N sequence types capable of being run, and determines whether the submodule code of the first submodule includes the preset sequence type. The n^{th} sequence type is different from the 1^{st} sequence type, and n=2, ..., N. If the submodule code of the first submodule does not include any sequence type capable of being run by the second compute node, the second compute node sends an alert.

When the first option in the submodule option of the first submodule is a third-type option, the submodule code of the first submodule includes first identification information. Alternatively, the submodule code of the first submodule includes first identification information and at least one sequence type. The first identification information indicates, in a code database, the at least one data sequence corresponding to the first code block. The sequence type indicates an encoding type corresponding to a data sequence. For descriptions of the code database, refer to the descriptions in FIG. 7.

When the first option in the submodule option of the first submodule is the third-type option, the second compute node determines the first identification information in the submodule code based on the encoding format indicated by the submodule option. The second compute node determines the preset sequence type, and determines, based on the first identification information and the preset sequence type, whether the at least one data sequence indicated by the first identification information includes the data sequence corresponding to the preset sequence type. In other words, the second compute node determines whether the data sequence corresponding to the preset sequence type is included in all data sequences indicated by the first identification information. When all the data sequences indicated by the first identification information include the data sequence corresponding to the preset sequence type, the second compute node determines that the data sequence corresponding to the preset sequence type is the to-be-run data sequence of the first submodule. When the data sequence corresponding to the preset sequence type is not included in all the data sequences indicated by the first identification information, the second compute node sends an alert, or the second compute node repeats the foregoing method after re-determining the preset sequence type.

For example, the second compute node searches a local storage space, and determines whether the local storage space stores the at least one data sequence indicated by the first identification information. When the at least one data sequence indicated by the first identification information is stored in the local storage space, the second compute node determines, based on the preset sequence type, whether all the data sequences indicated by the first identification information include the data sequence corresponding to the preset sequence type. Alternatively, when the local storage space stores the at least one sequence type indicated by the first identification information and the data sequence corresponding to each sequence type, the second compute node determines, based on the preset sequence type, whether all the sequence types indicated by the first identification information include the preset sequence type. When all the sequence types indicated by the first identification information include the preset sequence type, it is determined that the data sequence corresponding to the preset sequence type is the to-be-run data sequence corresponding to the first submodule.

When the at least one data sequence indicated by the first identification information is not stored in the local storage space, the second compute node obtains, from the code database based on the first identification information and the preset sequence type, the data sequence corresponding to the preset sequence type or sends an alert.

For example, the second compute node transmits the first identification information and the preset sequence type to the code database. When all the sequence types indicated by the first identification information in the code database include the preset sequence type, the code database sends, to the second compute node, the data sequence corresponding to the preset sequence type. When all the sequence types indicated by the first identification information in the code database do not include the preset sequence type, the code database sends the first indication information to the second compute node. The first indication information indicates that the code database does not include the data sequence corresponding to the preset sequence type. After obtaining the first indication information, the second compute node repeats the foregoing method after re-determining the preset sequence type, or sends an alert.

For example, the preset sequence type is the sequence type capable of being run by the second compute node. That is, a data sequence corresponding to the preset sequence type may be run on the second compute node.

When the second compute node is capable of running only one sequence type, the sequence type is the preset sequence type.

When the second compute node is capable of running N sequence types, the second compute node determines a 1^{st} sequence type from the N sequence types as the preset sequence type. N is a positive integer greater than 1. The second compute node determines whether the data sequence corresponding to the preset sequence type is included in all data sequences indicated by the first identification information. When the second compute node determines all the data sequences indicated by the first identification information do not include the data sequence corresponding to the preset sequence type, the second compute node determines, as the preset sequence type, an n^{th} sequence type from the N sequence types capable of being run, and determines whether all the data sequences indicated by the first identification information include the data sequence corresponding to the preset sequence type. The n^{th} sequence type is different from the 1^{st} sequence type, and n=2, ..., N. If all the data sequences indicated by the first identification information do not include a data sequence corresponding to any sequence type capable of being run by the second compute node, the second compute node sends an alert.

When the second compute node is capable of running a plurality of sequence types, the second compute node determines the preset sequence type based on a sequence type selection method. The sequence type selection method is not limited in embodiments of this application. For example, the sequence type selection method includes: determining the preset sequence type based on a specified sequence type. The specified sequence type may be specified by any one of the following: operation and maintenance personnel, a Wasm runtime, and the third compute node. The third node is a compute node connected to the second compute node, and an orchestration function module and/or a scheduling function module may be deployed in the third compute node. For the orchestration function module or the scheduling function module, refer to the descriptions in FIG. 1. Alternatively, the sequence type selection method includes: determining, based on an idle ratio of the accelerator in the second compute node, a sequence type corresponding to the most idle accelerator in the second compute node as the preset sequence type. Alternatively, the sequence type selection method includes: determining the preset sequence type based on a priority of each sequence type.

When the second compute node is capable of running a plurality of sequence types, the second compute node determines a sorting order of the plurality of sequence types based on a sequence type sorting method, and sequentially determines the preset sequence type according to the sorting order. The sequence type sorting method is not limited in embodiments of this application. For example, the sequence type sorting method includes: sorting according to the specified order, sorting, according to an idle ratio of an accelerator in the second compute node, a sequence type corresponding to the accelerator, sorting based on a priority of a sequence type, and the like.

Optionally, before S820, the second compute node may sense an encoding type or a sequence type capable of being run by the second compute node.

S830: Run the to-be-run sequence corresponding to the submodule.

After determining the to-be-run data sequence corresponding to the first submodule, the second compute node parses and runs the to-be-run data sequence corresponding to the first submodule.

When the first code block corresponding to the first submodule is the accelerator code block, the second compute node determines, based on the second option in the submodule option of the first submodule, whether the to-be-run data sequence corresponding to the first submodule needs to be translated. Specifically, the second compute node determines, based on the second option in the submodule option of the first submodule, that the to-be-run data sequence corresponding to the first submodule is intermediate representation code. The second compute node translates the to-be-run data sequence into device-specific code of the accelerator in the second compute node. The accelerator is, for example, an independent accelerator or an accelerator engine built in a processor. The second compute node runs, through the accelerator in the second compute node, the device-specific code corresponding to the to-be-run data sequence.

For example, the second compute node translates the to-be-run data sequence through a translation plug-in. For example, when the target executable file is a Wasm module, a Wasm runtime in the second compute node transmits the to-be-run data sequence to a built-in or external translation plug-in of the Wasm runtime. The translation plug-in translates the to-be-run data sequence into the device-specific code of the accelerator in the second compute node, and returns the device-specific code corresponding to the to-be-run data sequence to the Wasm runtime. The Wasm runtime transmits the device-specific code corresponding to the to-be-run data sequence to an accelerator runtime (accelerator runtime), and the accelerator runtime runs the device-specific code corresponding to the to-be-run data sequence through the accelerator.

For example, the second compute node translates the to-be-run data sequence through the accelerator runtime. For example, when the target executable file is a Wasm module, the Wasm runtime in the second compute node transmits the to-be-run data sequence to the accelerator runtime in the second compute node, and the accelerator runtime transfers the to-be-run data sequence to the device-specific code of the accelerator in the second compute node, and runs, through the accelerator, the device-specific code corresponding to the to-be-run data sequence.

When the second compute node determines that the to-be-run data sequence corresponding to the first submodule is the device-specific code, the second compute node runs the to-be-run data sequence through the accelerator in the second compute node.

Optionally, the second compute node may preload the target executable file. For example, the second compute node determines an internal structure of each section based on the section identifier in the target executable file. The second compute node traverses each submodule in each section, and determines a structure of the submodule code of the submodule based on the submodule option of the submodule. If the submodule is in a ready state, the to-be-run data sequence corresponding to the submodule is determined based on the structure of the submodule code of the submodule.

Optionally, the second compute node may load the target executable file as required. For example, when the second compute node needs to invoke any one of the accelerator code block, the AI model code block, or the host shared library code block when running the code section in the target executable file, the second compute node determines a corresponding section based on the section identifier in the target executable file. The second compute node determines, based on a structure of the section indicated by the section identifier, a to-be-invoked submodule in the section, and determines, based on the submodule option of the submodule, a to-be-run data sequence corresponding to the submodule, to run the to-be-run data sequence.

Optionally, before S810, each compute node in the at least one compute node may send second indication information to the third compute node. The second indication information indicates at least one encoding type or at least one sequence type capable of being run by each compute node. The orchestration function module and/or the scheduling function module is deployed in the third compute node. For the orchestration function module or the scheduling function module, refer to the descriptions in FIG. 1. The at least one compute node includes the second compute node.

In some embodiments, the third compute node obtains the target executable file, and determines an encoding type or a sequence type corresponding to a data sequence in each submodule in the target executable file. The third compute node determines, based on the encoding type or the sequence type corresponding to the data sequence in each submodule and an encoding type or a sequence type capable of being run by each compute node, a compute node or a compute node list used to execute each submodule.

According to the method in this embodiment of this application, the at least one code block is encoded in a standardized manner, to generate the target executable file. Because all submodules included in the target executable file are organized in a standardized form, when the target executable file is executed across platforms, a to-be-run data sequence in the target executable file can be quickly determined, to run the data sequence, so as to improve execution efficiency of a compute task.

Optionally, a text format of accelerator code may be represented as:
acccode ::= '("acccode' id codetype codeoption accfunccode')'

acccode is a keyword, and indicates that the following "id codetype codeoption accfunccode" belongs to a submodule corresponding to an accelerator code block. It should be understood that acccode is merely used as an example for description, and a specific name of the keyword is not limited in embodiments of this application. id is identification information of the accelerator code block, for example, a function name. For example, id is represented by a character "$" plus a function name (for example, add), that is, id is represented as $add. codetype is the second option in the submodule option, and is represented as a character string. codeoption is the first option in the submodule option, and is represented as a character string. accfunccode is the submodule code. A specific value manner of codetype and codeoption is not limited in embodiments of this application. For example, at least one character may be included, and the at least one character includes a word, a digit, a letter, a symbol, or the like.

In some embodiments, the accelerator code does not include codetype.

When the first option in the submodule option of the first submodule is the first-type option, the submodule code in the accelerator code may be represented as: accfunccode ::= '("accfunccode' funccodes')'. accfunccode is a keyword, and indicates that the following "funccodes" content is submodule code corresponding to the accelerator code block. It should be understood that accfunccode is merely used as an example for description, and a specific name of the keyword is not limited in embodiments of this application. funccodes is a data sequence, and is represented as a character string.

When the first option in the submodule option of the first submodule is the second-type option, the submodule code in the accelerator code may be represented as: accfunccode ::= '(''accfunccode' accfuncinsts')'. accfunccode is a keyword, and indicates that the following "accfuncinsts" is the submodule code corresponding to the accelerator code block. It should be understood that accfunccode is merely used as an example for description, and a specific name of the keyword is not limited in embodiments of this application. accfuncinsts is a submodule code vector, and includes at least one element.

Each element in the submodule code vector may be represented as: accfuncinst ::= '("accfuncinst' targettype funccodes')'. accfuncinst is a keyword, and indicates that the following "targettype funccodes" belongs to an element in the submodule code corresponding to the accelerator code block. It should be understood that accfuncinst is merely used as an example for description, and a specific name of the keyword is not limited in embodiments of this application. targettype is a sequence type, and is represented as a character string or a number. funccodes is a data sequence, and is represented as a character string.

When the first option in the submodule option of the first submodule is the third-type option, the submodule code in the accelerator code may be represented as: accfunccode ::= '(''accfunccode' functionid')'. Alternatively, the submodule code in the accelerator code may be represented as: accfunccode ::= '(''accfunccode' functionid targettypes')'. accfunccode is a keyword, and indicates that the following "functionid" or "functionid targettypes" is the submodule code corresponding to the accelerator code block. It should be understood that accfunccode is merely used as an example for description, and a specific name of the keyword is not limited in embodiments of this application. functionid is the first identification information, and is represented as an integer or a character string. targettypes is a sequence type vector, and includes at least one element, and each element is a sequence type. The sequence type is represented as a character string or a number.

Optionally, a text format of AI model code may be represented as:
model ::= '("model' modelname modeloption modelcontent')'

model is a keyword, and indicates that the following "modelname modeloption modelcontent" belongs to a submodule corresponding to an AI model code block. It should be understood that model is merely used as an example for description, and a specific name of the keyword is not limited in embodiments of this application. modelname is identification information of the AI model code block, for example, a model name. modelname is represented as a character string, and is generally a character string encoded in a unicode transformation format-8 bits (unicode transformation format-8 bits, UTF-8) format. modeloption is the first option in the submodule option, and is represented as a character string. modelcontent is the submodule code.

In some embodiments, the AI model code does not include modelname.

When the first option in the submodule option of the first submodule is the second-type option, the submodule code in the AI model code may be represented as: modelcontent ::= '("modelcontent' modelparaminsts')'. modelcontent is a keyword, and indicates that the following "modelparaminsts" is the submodule code corresponding to the AI model code block. It should be understood that modelcontent is merely used as an example for description, and a specific name of the keyword is not limited in embodiments of this application. modelparaminsts is a submodule code vector, and includes at least one element. Each element in the submodule code vector may be represented as: modelparaminst ::= '("modelparaminst' modelformat modelparams')'. modelparaminst is a keyword, and indicates that the following "modelformat modelparams" belongs to an element in the submodule code corresponding to the AI model code block. It should be understood that modelparaminst is merely used as an example for description, and a specific name of the keyword is not limited in embodiments of this application. modelformat is a sequence type, and is represented as a character string or a number. modelparams is a data sequence, and is represented as a character string.

When the first option in the submodule option of the first submodule is the third-type option, the submodule code in the AI model code may be represented as: modelcontent ::= '("modelcontent' modelid')'. Alternatively, the submodule code in the AI model code may be represented as: modelcontent ::= '("modelcontent' modelid modelformats')'. modelcontent is a keyword, and indicates that the following "modelid" or "modelid modelformats" is the submodule code corresponding to the AI model code block. It should be understood that modelcontent is merely used as an example for description, and a specific name of the keyword is not limited in embodiments of this application. modelid is the first identification information, and is represented as an integer or a character string. modelformats is a sequence type vector, and includes at least one element, and each element is a sequence type. The sequence type is represented as a character string or a number.

Optionally, a text format of host shared library code may be represented as:
hostsharedcode ::= '("hostsharedcode' hostshlibname hostshliboption hostshlibcontent')'

hostsharedcode is a keyword, and indicates that the following "hostshlibname hostshliboption hostshlibcontent" belongs to a submodule corresponding to a host shared library code block. It should be understood that hostsharedcode is merely used as an example for description, and a specific name of the keyword is not limited in embodiments of this application. hostshlibname is identification information of the host shared library code block, for example, a host shared library name. hostshlibname is represented as a string, and is generally a string encoded in a UTF-8 format. hostshliboption is the first option in the submodule option, and is represented as a character string. hostshlibcontent is the submodule code.

In some embodiments, the host shared library code does not include hostshlibname.

When the first option in the submodule option of the first submodule is the second-type option, the submodule code in the host shared library code may be represented as: hostshlibcontent ::= '("hostshlibcontent' hostshlibinsts')'. hostshlibcontent is a keyword, and indicates that the following "hostshlibinsts" is the submodule code corresponding to the host shared library code block. It should be understood that hostshlibcontent is merely used as an example for description, and a specific name of the keyword is not limited in embodiments of this application. hostshlibinsts is a submodule code vector, and includes at least one element. Each element in the submodule code vector may be represented as: hostshlibinst ::= '("hostshlibinst' targettype hostshlibs')'. hostshlibinst is a keyword, and indicates that the following "targettype hostshlibs" belongs to an element in the submodule code corresponding to the host shared library code block. It should be understood that hostshlibinst is merely used as an example for description, and a specific name of the keyword is not limited in embodiments of this application. targettype is a sequence type, and is represented as a character string or a number. hostshlibs is a data sequence, and is represented as a character string.

When the first option in the submodule option of the first submodule is the third-type option, the submodule code in the host shared library code may be represented as: hostshlibcontent ::= '("hostshlibcontent' hostshlibid')'. Alternatively, the submodule code in the host shared library code may be represented as: hostshlibcontent ::= '("hostshlibcontent' hostshlibid targettypes')'. hostshlibcontent is a keyword, and indicates that the following "hostshlibid" or "hostshlibid targettypes" is the submodule code corresponding to the host shared library code block. It should be understood that hostshlibcontent is merely used as an example for description, and a specific name of the keyword is not limited in embodiments of this application. hostshlibid is the first identification information, and is represented as an integer or a character string. targettypes is a sequence type vector, and includes at least one element, and each element is a sequence type. The sequence type is represented as a character string or a number.

FIG. 9 is a diagram of a structure of a data processing apparatus according to an embodiment of this application. The data processing apparatus 900 in FIG. 9 includes an obtaining module 910 and a processing module 920. The data processing apparatus 900 in FIG. 9 may be configured to perform the method in FIG. 2, FIG. 7, or FIG. 8. The data processing apparatus 900 in FIG. 9 may be applied to a compute node, for example, any compute node in FIG. 1.

When the data processing apparatus 900 is configured to perform the method in FIG. 2, the obtaining module 910 is configured to: obtain at least one original code file, and perform S210 in FIG. 2. The processing module 920 is configured to determine, based on at least one compilation instruction, an encoding format corresponding to each code block. The processing module 920 is further configured to compile, based on the encoding format corresponding to each of the at least one code block, at least one code block into a target executable file. The processing module 920 is configured to perform S220 and S230 in FIG. 2.

When the data processing apparatus 900 is configured to perform the method in FIG. 7, the processing module 920 is configured to perform S710 to S750 in FIG. 7.

When the data processing apparatus 900 is configured to perform the method in FIG. 8, the obtaining module 910 is configured to: obtain a target executable file, and perform S810 in FIG. 8. The processing module 920 is configured to determine, based on a section identifier and a submodule option of a submodule, a to-be-run data sequence corresponding to the submodule. The processing module 920 is further configured to run the to-be-run data sequence corresponding to the submodule. The processing module 920 is configured to perform S820 and S830 in FIG. 8.

Both the obtaining module 910 and the processing module 920 may be implemented by using software, or may be implemented by using hardware. For example, the following uses the processing module 920 as an example to describe an implementation of the processing module 920. Similarly, for an implementation of the obtaining module 910, refer to an implementation of the processing module 920.

A module is used as an example of a software functional unit, and the processing module 920 may include code run on a computing instance. The computing instance may include at least one of a physical host (compute device), a virtual machine, and a container. Further, there may be one or more computing instances. For example, the processing module 920 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC, or may be distributed in a plurality of VPCs. Usually, one VPC is deployed in one region. A communication gateway needs to be deployed in each VPC for communication between two VPCs in a same region or between VPCs in different regions. Interconnection between the VPCs is implemented through the communication gateways.

A module is used as an example of a hardware functional unit, and the processing module 920 may include at least one compute device like a server. Alternatively, the processing module 920 may be a device implemented using an application-specific integrated circuit (application-specific integrated circuit, ASIC) or a programmable logic device (programmable logic device, PLD) or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the processing module 920 may be distributed in a same region, or may be distributed in different regions. The plurality of compute devices included in the processing module 920 may be distributed in a same AZ, or may be distributed in different AZs. Similarly, the plurality of compute devices included in the processing module 920 may be distributed in a same VPC, or may be distributed in a plurality of VPCs. The plurality of compute devices may be any combination of compute devices such as a server, an ASIC, a PLD, a CPLD, an FPGA, and GAL.

Therefore, modules in examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that when the apparatus provided in the foregoing embodiment performs the foregoing method, division into the foregoing functional modules is merely used as an example for description. In practice, the foregoing functions may be allocated as needed to different functional modules for implementation, that is, an internal structure of the apparatus is divided into different functional modules to implement all or some of the functions described above. For example, the obtaining module 910 may be configured to perform any step in the foregoing methods, and the processing module 920 may be configured to perform any step in the foregoing methods. Steps implemented by the obtaining module 910 and the processing module 920 may be specified as required. The obtaining module 910 and the processing module 920 respectively implement different steps in the foregoing methods to implement all functions of the foregoing apparatus.

In addition, the apparatuses provided in the foregoing embodiments and the method embodiments belong to a same concept. For specific implementation processes thereof, refer to the method embodiments. Details are not described herein again.

The method provided in embodiments of this application may be performed by a compute device, and the compute device may also be referred to as a computer system. The compute device may include a hardware layer, an operating system layer running above the hardware layer, and an application layer running above the operating system layer. The hardware layer includes hardware, for example, a processing unit, an internal memory, and a memory control unit. Subsequently, functions and structures of the hardware are described in detail. The operating system is any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, optionally, the computer system is a handheld device, for example, a smartphone, or a terminal device, for example, a personal computer. This is not particularly limited in this application, provided that the method according to embodiments of this application can be used. The method provided in embodiments of this application may be performed by the compute device or a functional module that is in the compute device and that can invoke and execute a program.

FIG. 10 is a block diagram of a structure of a compute device 1000 according to an embodiment of this application. The compute device 1000 may be a server, a computer, or another device with a computing capability. The compute device 1000 shown in FIG. 10 includes at least one processor 1010 and a memory 1020.

It should be understood that quantities of processors and memories in the compute device 1000 are not limited in this application.

The processor 1010 executes instructions in the memory 1020, so that the compute device 1000 implements the method provided in this application. Alternatively, the processor 1010 executes instructions in the memory 1020, so that the compute device 1000 implements the functional modules provided in this application, to implement the method provided in this application.

Optionally, the compute device 1000 further includes a communication interface 1030. The communication interface 1030 uses a transceiver module, for example, but not limited to, a network interface card or a transceiver, to implement communication between the compute device 1000 and another device or a communication network.

Optionally, the compute device 1000 further includes a system bus 1040. The processor 1010, the memory 1020, and the communication interface 1030 are separately connected to the system bus 1040. The processor 1010 can access the memory 1020 through the system bus 1040. For example, the processor 1010 can read and write data or execute code in the memory 1020 through the system bus 1040. The system bus 1040 is a peripheral component interconnect express (peripheral component interconnect express, PCI) bus, an extended industry standard architecture (extended industry standard architecture, EISA) bus, or the like. The system bus 1040 is categorized as an address bus, a data bus, a control bus, or the like. For ease of representation, only one thick line is for representing the bus in FIG. 10, but this does not mean that there is only one bus or only one type of bus.

In a possible implementation, a function of the processor 1010 is mainly to interpret instructions (or code) of a computer program and process data in computer software. The instructions of the computer program and data in the computer software can be stored in a cache of the memory 1020 or the processor 1010.

Optionally, the processor 1010 may be an integrated circuit chip and has a signal processing capability. By way of example but not limitation, the processor 1010 is a general purpose processor, a digital signal processor (digital signal processor, DSP), an ASIC, an FPGA or another programmable logic device, a discrete gate or transistor logic device, or a discrete hardware component. The general-purpose processor is a microprocessor or the like. For example, the processor 1010 is a central processing unit (central processing unit, CPU).

The memory 1020 can provide a running space for a process in the compute device 1000. For example, the memory 1020 stores a computer program (specifically, program code) used to generate the process. After the computer program is run by the processor to generate the process, the processor allocates a corresponding storage space to the process in the memory 1020. Further, the storage space further includes a text segment, an initial data segment, an uninitialized data segment, a stack segment, a heap segment, and the like. The memory 1020 stores, in the storage space corresponding to the process, data generated during running of the process, for example, intermediate data or process data.

Optionally, the memory is also referred to as an internal memory, and is configured to temporarily store operation data in the processor 1010 and data exchanged with an external memory, for example, a hard disk. As long as the computer is running, the processor 1010 transfers data that needs to be calculated to the memory for calculation, and transmits a result after the calculation is completed.

By way of example but not limitation, the memory 1020 is a volatile memory or a nonvolatile memory, or may include both a volatile memory and a nonvolatile memory. The non-volatile storage medium may be, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM) and serves as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), and a direct rambus random access memory (direct rambus DRAM, DRDRAM). It should be noted that the memory 1020 of the systems and methods described in this specification is intended to include, but is not limited to, these and any memory of another proper type.

It should be understood that a structure of the foregoing enumerated compute device 1000 is merely an example for description, and this application is not limited thereto. The compute device 1000 in this embodiment of this application includes various hardware in a computer system in a conventional technology. For example, the compute device 1000 further includes a memory other than the memory 1020, for example, a magnetic disk memory. A person skilled in the art should understand that the compute device 1000 may further include another component necessary for implementing normal running. In addition, a person skilled in the art should understand that, based on a specific requirement, the compute device 1000 may further include a hardware component implementing another additional function. Moreover, a person skilled in the art should understand that the compute device 1000 may include only a component required for implementing embodiments of this application, and does not need to include all the components shown in FIG. 10.

An embodiment of this application further provides a compute device cluster. The compute device cluster includes at least one compute device. The compute device may be a server. In some embodiments, the compute device may alternatively be a terminal device, for example, a desktop computer, a notebook computer, or a smartphone.

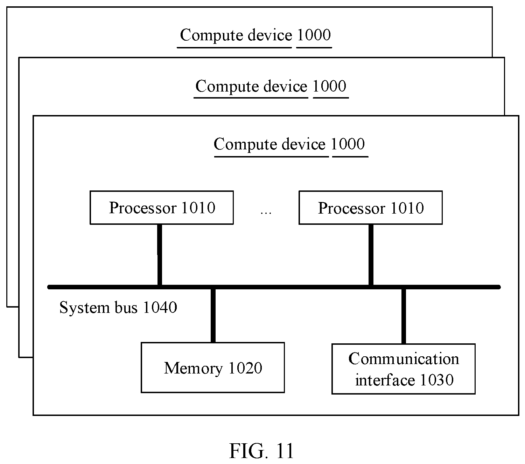

As shown in FIG. 11, the compute device cluster includes at least one compute device 1000. Memories 1020 of one or more compute devices 1000 in the compute device cluster may store same instructions used to perform the foregoing method.

In some possible implementations, the memories 1020 of the one or more compute devices 1000 in the compute device cluster may alternatively separately store some instructions used to perform the foregoing method. In other words, a combination of one or more compute devices 1000 may jointly execute instructions of the foregoing method.

It should be noted that memories 1020 of different compute devices 1000 in the compute device cluster may store different instructions respectively used to perform some functions of the foregoing apparatus. In other words, the instructions stored in the memories 1020 in different compute devices 1000 may implement functions of one or more modules in the foregoing apparatus.

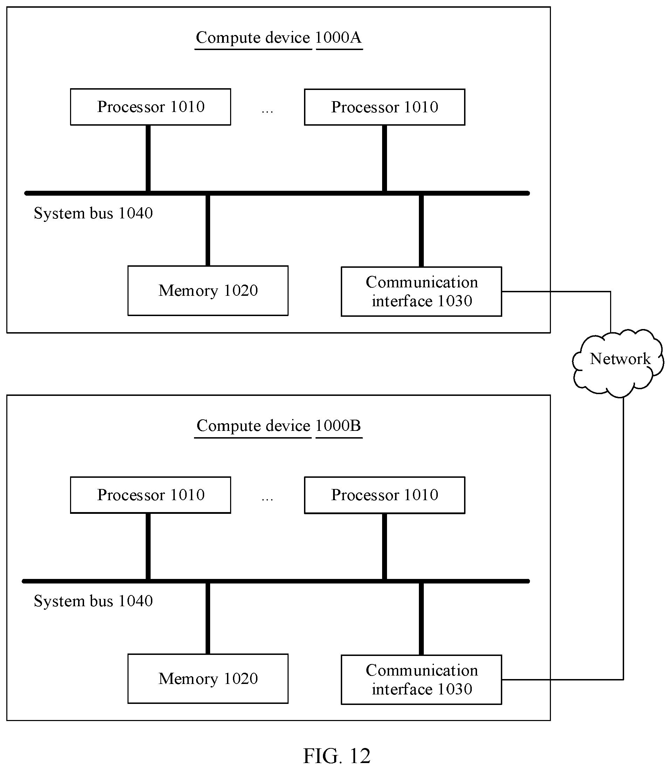

In some possible implementations, the one or more compute devices in the compute device cluster may be connected through a network. The network may be a wide area network, a local area network, or the like. FIG. 12 shows a possible implementation. As shown in FIG. 12, two compute devices 1000A and 1000B are connected through a network. Specifically, each compute device is connected to the network through a communication interface in the compute device.

It should be understood that a function of the compute device 1000A shown in FIG. 12 may alternatively be completed by a plurality of compute devices 1000. Similarly, a function of the compute device 1000B may alternatively be completed by a plurality of compute devices 1000.

An embodiment of this application further provides a data processing system. The data processing system includes the first compute node and the second compute node in the foregoing embodiments of this application. Alternatively, the data processing system includes the first compute node, the second compute node, and the third compute node in the foregoing embodiments of this application.

An embodiment of this application further provides a computer program product including instructions. The computer program product may be software or a program product that includes the instructions and that can run on a compute device or be stored in any available medium. When the computer program product runs on the compute device, the compute device is enabled to perform the method provided above, or the compute device is enabled to implement functions of the apparatus provided above.

An embodiment of this application further provides a computer program product including instructions. The computer program product may be software or a program product that includes the instructions and that can run on a compute device cluster or be stored in any available medium. When the computer program product is run by the compute device cluster, the compute device cluster is enabled to perform the method provided above, or the compute device cluster is enabled to implement functions of the apparatus provided above.

An embodiment of this application further provides a computer-readable storage medium. The computer-readable storage medium may be any usable medium that can be stored by a compute device, or a data storage device like a data center that includes one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive), or the like. The computer-readable storage medium includes instructions. When the instructions in the computer-readable storage medium are executed on the compute device, the compute device is enabled to perform the method provided above.

An embodiment of this application further provides a computer-readable storage medium. The computer-readable storage medium may be any usable medium that can be stored by a compute device, or a data storage device like a data center that includes one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed by a compute device cluster, the compute device cluster is enabled to perform the method provided above.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, comprising:
obtaining at least one original code file, wherein the original code file comprises at least one code block, and each code block comprises at least one code statement;
determining, based on at least one compilation instruction, an encoding format corresponding to each code block, wherein the encoding format corresponding to the code block indicates a structure of the encoded code block; and
compiling, based on the encoding format corresponding to each of the at least one code block, the at least one code block into a target executable file, wherein the target executable file comprises at least one section, each section comprises a section identifier and at least one submodule, each submodule corresponds to one code block, all submodules in the section correspond to code blocks of a same type, the section identifier indicates the type of the code block corresponding to the section, each submodule comprises a submodule option and submodule code, the submodule option indicates an encoding format corresponding to the submodule code, the submodule code comprises at least one data sequence or identification information corresponding to the at least one data sequence, and each of the at least one data sequence is determined based on the encoding format indicated by the submodule option and a corresponding code block.

2. The method according to claim 1, wherein a compilation instruction corresponding to a first code block comprises a first parameter, a submodule option of a submodule corresponding to the first code block comprises a first option, the first option is the same as the first parameter, and the first code block belongs to the at least one code block.

3. The method according to claim 1 or 2, wherein when the submodule option comprises a first-type option, the submodule code comprises one data sequence, and the data sequence in the submodule code is determined based on an encoding type indicated by the first-type option and a corresponding code block.

4. The method according to claim 1 or 2, wherein when the submodule option comprises a second-type option, the submodule code comprises at least one sequence type and a data sequence corresponding to each sequence type, the sequence type indicates an encoding type corresponding to a data sequence, and the data sequence is determined based on the encoding type indicated by the sequence type and a corresponding code block.

5. The method according to claim 1 or 2, wherein when the submodule option comprises a third-type option, the submodule code comprises first identification information, or the submodule code comprises first identification information and at least one sequence type, the first identification information indicates, in a code database, the at least one data sequence corresponding to the code block corresponding to the submodule, and the sequence type indicates an encoding type corresponding to a data sequence.

6. The method according to claim 5, wherein the method further comprises:
determining, based on the at least one sequence type, at least one data sequence corresponding to the first code block, wherein each data sequence corresponds to one sequence type, and the first code block belongs to the at least one code block; and
transmitting the at least one sequence type and the at least one data sequence corresponding to the first code block to the code database, to obtain the first identification information of the submodule corresponding to the first code block.

7. The method according to any one of claims 4 to 6, wherein the method is performed by a first compute node, and each of the at least one sequence type is a sequence type capable of being generated by the first compute node.

8. The method according to any one of claims 1 to 7, wherein when the first code block is an accelerator code block, a submodule option of a first submodule corresponding to the first code block further comprises a second option, the first code block belongs to the at least one code block, the second option indicates that submodule code of the first submodule is intermediate representation code or device-specific code, and when the submodule code of the first submodule is the intermediate representation code, the submodule code is run by an accelerator after being translated into the device-specific code.

9. The method according to claim 8, wherein the compilation instruction corresponding to the first code block further comprises a second parameter, and the second parameter is the same as the second option.

10. The method according to any one of claims 1 to 9, wherein when the at least one code block comprises one or more accelerator code blocks, the target executable file further comprises an accelerator function section, and the accelerator function section is used to declare functions corresponding to the one or more accelerator code blocks.

11. A data processing method, comprising:
obtaining a target executable file, wherein the target executable file corresponds to at least one original code file, the original code file comprises at least one code block, each code block comprises at least one code statement, the target executable file comprises at least one section, each section comprises a section identifier and at least one submodule, each submodule corresponds to one code block, all submodules in the section correspond to code blocks of a same type, the section identifier indicates the type of the code block corresponding to the section, each submodule comprises a submodule option and submodule code, the submodule option indicates an encoding format corresponding to the submodule code, the submodule code comprises at least one data sequence or identification information corresponding to the at least one data sequence, and each of the at least one data sequence is determined based on the encoding format indicated by the submodule option and a corresponding code block
determining, based on the section identifier and the submodule option of the submodule, a to-be-run data sequence corresponding to the submodule, wherein the to-be-run data sequence belongs to the at least one data sequence; and
running the to-be-run data sequence corresponding to the submodule.

12. The method according to claim 11, wherein when the submodule option comprises a first-type option, the submodule code comprises one data sequence, the data sequence in the submodule code is determined based on an encoding type indicated by the first-type option and a corresponding code block, and the data sequence in the submodule code is the to-be-run data sequence.

13. The method according to claim 11, wherein when the submodule option comprises a second-type option, the submodule code comprises at least one sequence type and a data sequence corresponding to each sequence type, the sequence type indicates an encoding type corresponding to a data sequence, and the data sequence is determined based on the encoding type indicated by the sequence type and a corresponding code block.

14. The method according to claim 13, wherein when the submodule option comprises the second-type option, determining, based on the section identifier and the submodule option of the submodule, the to-be-run data sequence corresponding to the submodule comprises:
determining, based on the section identifier and the encoding format indicated by the submodule option of the submodule, the at least one sequence type comprised in the submodule code;
when the at least one sequence type comprises a preset sequence type, determining that a data sequence corresponding to the preset sequence type is the to-be-run data sequence; and
when the at least one sequence type does not comprise the preset sequence type, sending an alert.

15. The method according to claim 11, wherein when the submodule option comprises a third-type option, the submodule code comprises first identification information, or the submodule code comprises first identification information and at least one sequence type, the first identification information indicates, in a code database, the at least one data sequence corresponding to the code block corresponding to the submodule, and the sequence type indicates an encoding type corresponding to a data sequence.

16. The method according to claim 15, wherein when the submodule option comprises the third-type option, determining, based on the section identifier and the submodule option of the submodule, the to-be-run data sequence corresponding to the submodule comprises:
determining, based on the section identifier and the encoding format indicated by the submodule option of the submodule, the first identification information;
when the at least one data sequence indicated by the first identification information comprises a data sequence corresponding to a preset sequence type, determining that the data sequence corresponding to the preset sequence type is the to-be-run data sequence; and
when the at least one data sequence indicated by the first identification information does not comprise the data sequence corresponding to the preset sequence type, sending an alert.

17. The method according to claim 15 or 16, wherein when the submodule option comprises the third-type option, the method further comprises:
when the at least one data sequence corresponding to the first identification information is stored in a local storage space, obtaining, from the local storage space based on the first identification information, the at least one data sequence corresponding to the first identification information; and
when the at least one data sequence corresponding to the first identification information is not stored in the local storage space, obtaining, from the code database based on the preset sequence type and the first identification information, the data sequence corresponding to the first identification information and the preset sequence type, or sending an alert.

18. The method according to any one of claims 14 to 17, wherein the method is performed by a second compute node, and the preset sequence type is a sequence type capable of being run by the second compute node.

19. The method according to any one of claims 11 to 18, wherein when a first code block is an accelerator code block, a submodule option of a first submodule corresponding to the first code block further comprises a second option, the first code block belongs to the at least one code block, and the second option indicates that submodule code of the first submodule is intermediate representation code or device-specific code; when the submodule code of the first submodule is the intermediate representation code, the to-be-run data sequence is translated into the device-specific code, and the device-specific code corresponding to the to-be-run data sequence is run on an accelerator; or when the submodule code of the first submodule is the device-specific code, the to-be-run data sequence is run on an accelerator.

20. The method according to any one of claims 1 to 19, wherein the type of the code block comprises: an accelerator code block, an AI model code block, or a host shared library code block, the accelerator code block is used for running on the accelerator, the AI model code block is used for training or inference of an AI model, and the host shared library code block is used for assisting in running the accelerator code block and/or the AI model code block.

21. A data processing apparatus, comprising a processor, wherein the processor is configured to execute instructions stored in a memory, so that the data processing apparatus is configured to perform the method according to any one of claims 1 to 20.

22. The data processing apparatus according to claim 21, wherein the data processing apparatus comprises at least one compute device, and each compute device comprises a processor; and
the processor of the at least one compute device is configured to execute the instructions stored in the memory, so that the data processing apparatus performs the method according to any one of claims 1 to 20.

23. A chip system, comprising a logic circuit, wherein the logic circuit is configured to: be coupled to an input/output interface, and transmit data through the input/output interface, to perform the method according to any one of claims 1 to 20.

24. A computer-readable storage medium, comprising computer program instructions, wherein when the computer program instructions are executed by a data processing apparatus, the data processing apparatus performs the method according to any one of claims 1 to 20.

25. A computer program product comprising instructions, wherein when the instructions are run by a data processing apparatus, the data processing apparatus is enabled to perform the method according to any one of claims 1 to 20.
